# EUROPÄISCHE PATENTSCHRIFT

(11) **EP 3 648 924 B1**
(45) Veröffentlichungstag und Bekanntmachung des Hinweises auf die Patenterteilung: **08.09.2021**
(21) Anmeldenummer: 18740188.0
(22) Anmeldetag: 10.07.2018
(51) Int. Cl.: B23K 11/14, B23K 11/20, B23K 11/18, B23K 11/00, B23K 35/02

(54) **SCHWEISSHILFSFÜGETEIL, BAUTEILVERBUND MIT EINEM SOLCHEN SCHWEISSHILFSFÜGETEILS, UND HERSTELLUNGSVERFAHREN FÜR EINEN BAUTEILVERBUND AUS ZUMINDEST EINEM ERSTEN BAUTEIL UND EINEM SOLCHEN SCHWEISSHILFSFÜGETEIL**
AUXILIARY CONNECTING PIECE FOR WELDING, ASSEMBLY WITH SUCH CONNECTING PIECE, AND METHOD MANUFACTURING AN ASSEMBLY COMPRISING AT LEAST A FIRST WORKPIECE AND SUCH CONNECTING PIECE
PIÈCE D'AIDE À LA CONNECTION PAR SOUDAGE, ASSEMBLAGE AVEC UNE TELLE PIÈCE D'AIDE À LA CONNECTION, ET MÉTHODE DE FABRICATION D'UN ASSEMBLAGE COMPRENANT AU MOINS UNE PREMIÈRE PIÈCE ET UNE TELLE PIÈCE D'AIDE À LA CONNECTION

(30) Priorität: 11.07.2017 DE 102017115529
(43) Veröffentlichungstag der Anmeldung: 13.05.2020
(73) Patentinhaber: Böllhoff Verbindungstechnik GmbH, 33649 Bielefeld (DE)
(72) Erfinder: DRAHT, Torsten, 33758 Schloss Holte-Stukenbrock (DE); HARTWIG-BIGLAU, Sergej, 32120 Hiddenhausen (DE)
(74) Vertreter: HWP Intellectual Property
(86) Internationale Anmeldenummer: PCT/EP2018/068697
(87) Internationale Veröffentlichungsnummer: WO 2019/011931

(56) Entgegenhaltungen:
- DE-A1- 4 237 361
- DE-A1- 19 740 022
- DE-A1-102014 201 871

## Beschreibung

### 1. Gebiet der Erfindung

Die vorliegende Erfindung betrifft ein Schweißhilfsfügeteil, mit dem eine Schweißverbindung, insbesondere eine Widerstandsschweißverbindung, zwischen einem ersten Bauteil aus schlecht schweißbarem Material und einem zweiten Bauteil aus schweißbarem Material herstellbar ist. Des Weiteren betrifft vorliegende Erfindung ein Verfahren zum Herstellen eines derartigen Schweißhilfsfügeteils sowie ein Verfahren zur Herstellung einer entsprechenden Verbindung zwischen dem ersten und dem zweiten Bauteil mithilfe des Schweißhilfsfügeteils. Abschließend ist vorliegende Erfindung ebenfalls auf einen Bauteilverbund bestehend aus dem mindestens einem ersten Bauteil und dem oben genannten Schweißhilfsftigeteil gerichtet.

### 2. Hintergrund der Erfindung

Seit geraumer Zeit besteht beispielsweise in der Automobilindustrie ein großer Bedarf an der Herstellung von Schweißverbindungen zwischen zwei Bauteilen, von denen zumindest ein Bauteil aus einem nicht oder schlecht schweißbarem Material besteht. Zu diesen Materialien zählt unter anderem Aluminium oder Kunststoff. Obwohl derartige Materialien zur Herstellung einer Schweißverbindung aufgrund ihrer Natur nicht geeignet sind, sollen sie dennoch für beispielsweise das effektive Widerstandsschweißen zugänglich gemacht werden. Aus diesem Grund werden derartige Bauteile aus nicht oder schlecht schweißbarem Material mit einem Schweißhilfsftigeteil aus schweißbarem Material ausgestattet. Verfahren, die die oben beschriebene Bauteilkonfiguration sowie die Verwendung eines Schweißhilfsfügeteils beschreiben, sind unter anderem in DE 10 2004 025 492 A1 und WO 2014/048885 A2 offenbart.

Bekannte Schweißhilfsfügeteile sind gerade in ihrer Form auf das Widerstandsschweißen abgestimmt. Beim Widerstandsschweißen wird ein hoher Stromfluss im Schweißhilfsfügeteil erzeugt, sodass im Kontaktbereich zwischen dem Schweißhilfsfügeteil und zumindest einem zweiten Bauteil ein Verschmelzen von Material und somit eine Schweißverbindung zwischen dem Schweißhilfsfügeteil und dem zweiten Bauteil erzeugt wird. Ein derartiges Schweißhilfsfügeteil ist beispielsweise in DE 42 37 361 A1 (Basis des Oberbegriffes des Anspruchs 1) beschrieben. Dieses Schweißhilfsfügeteil umfasst einen zylindrischen Schaft, an dem an einem Ende ein Elementkopf und an einem anderen Ende eine Schweißwarze angeordnet ist. Der Elementkopf zeichnet sich an seiner dem Schaft zugewandten Kopfunterseite durch einen Ringwulst aus. Dieser Ringwulst ist am radialen Außenrand der Kopfunterseite angeordnet, sodass sie den radialen Außenrand der Kopfunterseite und somit auch des Elementkopfes bildet. Das hier beschriebene Schweißhilfsfügeteil wird vor allem in Bauteilen aus Aluminium, im Speziellen Aluminiumbleche, eingedrückt. Bei diesem Einpressen erzeugt der Schaft des Schweißhilfsfügeteils eine Durchführungsöffnung und der Ringwulst staucht die Leibung der gestanzten Durchführungsöffnung zur Lochmitte hin. Auf diese Weise wird ein etwaiges Spiel zwischen dem Schaft und der Öffnung im Bauteil beseitigt. Gleichzeitig wird durch den Ringwulst auch Material radial auswärts verdrängt, welches unbeschränkt abfließen kann. Aufgrund der radial außen liegenden Anordnung des Ringwulstes und seiner keilähnlichen Querschnittsgestalt unterstützt diese Formgebung des Elementkopfes ein tiefes Eindringen des Schweißhilfsfügeteils in das Aluminiumbauteil. Entsprechend ragt nachteilig nicht nur die Schweißwarze sondern auch ein Teil des Elementschafts über die freie Oberfläche des ersten Bauteils hinaus und behindert dadurch einen späteren Schweißvorgang.

Ein weiteres Schweißhilfsfügeteil für das Widerstandsschweißen ist in DE 10 2014 201 871 A1 beschrieben. Im Unterschied zu dem oben beschriebenen Widerstandsschweißelement weist die Unterseite des Elementkopfes wenigstens zwei steife, geschlossen umlaufende Prägeringe auf, die in axialer Richtung von der Unterseite des Elementkopfes abstehen und in radialer Richtung zueinander beabstandet sind. Im Gegensatz zu dem oben beschriebenen Schweißhilfsfügeteil dienen die Prägeringe an der Unterseite des Elementkopfes einer gezielten Abdichtung der Fügestelle. Zu diesem Zweck werden die Prägeringe in die der Kopfunterseite zugewandte Oberfläche des ersten Bauteils eingedrückt bzw. eingeprägt. Dies hat zur Folge, dass ein Eindringen korrosiver Medien, wie zum Beispiel Feuchtigkeit und/oder Schmutz, in den Spalt zwischen Elementkopf und angrenzendem Bauteil verhindert ist. Dies wird gerade durch den radial außen angeordneten ersten Prägering realisiert. Der radial innere Prägering bewirkt eine innere Abdichtung, die beispielsweise das Nach-außen-Dringen von Gasen während des Widerstandsschweißvorgangs oder eines optional verwendeten Klebstoffs verhindert. Entsprechend ist die Richtung des Materialflusses an verdrängtem Material nicht von Bedeutung. Vielmehr soll nur dafür gesorgt werden, dass die mindestens zwei Prägeringe durch das Material des angrenzenden Bauteils umschlossen werden. Denn gerade das Einbetten der Prägeringe in das Bauteilmaterial sorgt für die gewünschte Abdichtung. Es hat sich aber gezeigt, dass gerade die gegenläufige Materialverdrängung der zueinander benachbarten Prägeringe zu einem Materialstau führt, der Druckspannungen an der Bauteiloberfläche erzeugt. Diese Druckspannungen wirken dem Eindringen des Schweißhilfsfügeteils entgegen und beeinflussen somit nachteilig den Fügevorgang des Schweißhilfsfügeteils.

Ausgehend vom diskutierten Stand der Technik ist es die Aufgabe vorliegender Erfindung, ein Schweißhilfsfügeteil bereitzustellen, welches einfach und verlässlich in ein Bauteil eingepresst werden kann. Zudem ist es Aufgabe vorliegender Erfindung, eine entsprechende Verbindung zwischen zwei Bauteilen mithilfe des Schweißhilfsfügeteils, ein Verbindungsverfahren für diese beiden Bauteile mithilfe des Schweißhilfsfügeteils sowie ein Herstellungsverfahren für ein derartiges Schweißhilfsfügeteil vorzuschlagen.

### 3. Zusammenfassung der Erfindung

Die obige Aufgabe wird durch ein Schweißhilfsfügeteil gemäß dem unabhängigen Patentanspruch 1, durch eine Verbindung zwischen zumindest einem Bauteil und dem genannten Schweißhilfsfügeteil gemäß dem unabhängigen Patentanspruch 20, durch ein Herstellungsverfahren für einen Bauteilverbund aus zumindest einem ersten Bauteil und dem Schweißhilfsfügeteil gemäß dem unabhängigen Patentanspruch 24 sowie durch ein Herstellungsverfahren für das Schweißhilfsfügeteil gemäß dem unabhängigen Patentanspruch 28 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Mit dem erfindungsgemäßen Schweißhilfsfügeteil ist eine Schweißverbindung, insbesondere eine Widerstandsschweißverbindung, zwischen einem ersten Bauteil aus schlecht schweißbarem Material und einem zweiten Bauteil aus schweißbarem Material herstellbar. Zu diesem Zweck weist das erfindungsgemäße Schweißhilfsfügeteil die folgenden Merkmale auf: einen Stanzschaft, der annähernd drehungsfrei stanzend in das erste Bauteil einpressbar ist, der entlang einer Längsachse des Schweißhilfsfügeteils verläuft und der an einem ersten axialen Ende einen Elementkopf und an einem zweiten axialen Ende eine in axialer Richtung vom Stanzschaft vorstehende Schweißkontaktzone aufweist. Der Elementkopf des Schweißhilfsfügeteils erstreckt sich radial über den Stanzschaft hinaus und umfasst eine schaftabgewandte Kopfoberseite und eine schaftzugewandte Kopfunterseite, die über eine radial den Elementkopf begrenzende Umlauffläche oder zylindrische Mantelfläche miteinander verbunden sind. Des Weiteren zeichnet sich der Elementkopf dadurch aus, dass die Kopfunterseite mindestens einen geschlossen um den Stanzschaft umlaufenden und axial in Richtung Stanzschaft vorstehenden Klemmring aufweist, der in einem ersten Radialabstand zum Stanzschaft angeordnet ist, eine dreiecksähnliche Querschnittsform besitzt, die sich in axialer Richtung des Stanzschafts verjüngt, und der an einer vom Stanzschaft abgewandten Seite radial beabstandet zur Umlauffläche des Elementkopfes angeordnet ist.

Das Schweißhilfsfügeteil zeichnet sich durch eine spezielle Gestaltung des Elementkopfes, und zwar der Unterseite des Elementkopfes, aus. Denn diese Unterseite des Elementkopfes weist einen geschlossen umlaufenden Klemmring auf, der gezielt beabstandet zum zylindrischen Stanzschaft sowie zur radialen Außenseite des Elementkopfes angeordnet ist. Der bevorzugte Klemmring ist dazu ausgelegt, den Stanzschaft durch einen entsprechend umgeleiteten Materialfluss festzuklemmen und dabei gleichzeitig nicht das Eindringen des Schweißhilfsfügeteils in das erste Bauteil zu behindern. Daher ist es bevorzugt, dass die radiale Position des Klemmrings in Bezug auf den zu befestigenden Stanzschaft im ersten Bauteil auf die Querschnittsform bzw. das Verdrängungsvolumen des Klemmrings abgestimmt ist.

Gemäß einer bevorzugten Ausführungsform vorliegender Erfindung wird der Klemmring gezielt nur einzeln an der Kopfunterseite mit einem ausreichenden Abstand zur radialen Außenkante des Elementkopfs eingesetzt. Auf diese Weise dienen die durch den Klemmring erzeugten Materialflüsse radial einwärts der Klemmung des Stanzschafts sowie radial auswärts der weiteren Klemmung gegen das umgebende Material des Schweißhilfsfügeteils, ohne eine behindernde Materialverdrängung mit einem weiteren Prägering (siehe oben im Stand der Technik) hervorzurufen. Des Weiteren sorgt die Anordnung des Klemmrings an der Unterseite des Elementkopfs dafür, dass der radial nach außen gerichtete Materialfluss gerade nicht in Richtung freier Bauteiloberflächen wirkungslos abfließen kann. Diese Effekte lassen sich aber auch durch Kombination mit einem weiteren konzentrisch zum Stanzschaft und radial außen angeordneten Klemmring ähnlicher Geometrie oder mit Hilfe eines Prägerings erzielen. Der Klemmring hat dabei bevorzugt ebenfalls den dreiecksähnlichen Querschnitt. Der Prägering ist vorzugsweise verdickt oder ballig ausgeformt, ohne einen gerichteten Materialfluss zu erzielen.

Gemäß einer bevorzugten Ausführungsform des oben beschriebenen Schweißhilfsfügeteils ist der Klemmring an der vom Stanzschaft abgewandten Seite durch eine radial verlaufende äußere Ringfläche an der Kopfunterseite und/oder durch mindestens einen geschlossen oder durchbrochen um den Stanzschaft umlaufenden und axial in Richtung Stanzschaft vorstehenden Außenring an der Kopfunterseite umgeben. In diesem Zusammenhang hat der Außenring vorzugsweise die Form eines Klemmrings oder eines Prägerings.

Zur Unterstützung der Befestigung des Schweißhilfsfügeteils in einem Bauteil hat es sich als vorteilhaft erwiesen, an der Kopfunterseite des Elementkopfes ergänzend zum Klemmring mindestens einen weiteren Ring vorzusehen. Vorzugsweise ist dieser Ring derart angeordnet, dass er den oben genannten Klemmring umgibt. Je nach Formgestaltung weist dieser Außenring die Form des zuvor beschriebenen Klemmrings auf oder er ist als ein Prägering ausgeführt. Ein zusätzlicher Klemmring als Außenring unterstützt die Befestigung des Schweißhilfsfügeteils im Bauteil. Des Weiteren erhöht dieser weitere Klemmring vorteilhafterweise den Materialfluss in Richtung Stanzschaft und somit die Klemmung des Stanzschaftes und des gesamten Schweißhilfsfügeteils im Bauteil.

Gleichermaßen ist es aber ebenfalls bevorzugt, den Außenring in Form eines Prägerings, vorzugsweise mit einer balligen oder gleichmäßigen Querschnittsform, auszugestalten. Da während des Fügens des Schweißhilfsfügeteils in das Bauteil dieser Prägering in gleicher Weise wie der Klemmring in das Bauteilmaterial eingepresst wird, trägt gerade die Form des Prägerings und seine Verbindung mit dem Bauteil zu einer Abdichtung der Fügestelle nach außen bei. Des Weiteren verhindert der Prägering vorzugsweise einen Materialfluss radial auswärts vom Klemmring. Dies hat zur Folge, dass die klemmende Wirkung der durch den Klemmring erzeugten Materialverdrängung unterstützt wird. Zudem trägt der Prägering trotz seiner bevorzugten gleichmäßigen Querschnittsform zu einer Materialverdrängung des Bauteilmaterials in Richtung des Stanzschafts bei. Somit unterstützt diese Materialverdrängung das Klemmen des Stanzschafts im Bauteilmaterial.

Es ist ebenfalls bevorzugt, anstelle des Außenrings eine um den Klemmring außen umlaufende Ringfläche an der Kopfunterseite des Elementkopfes vorzusehen. Dies bedeutet, dass sich der Elementkopf an dieser Ringfläche bevorzugt parallel zur Oberseite des Elementkopfes erstreckt. Des Weiteren ist es erfindungsgemäß bevorzugt, dass diese Ringfläche in die radial den Elementkopf begrenzende Umlauffläche übergeht.

Gemäß einer weiteren bevorzugten Ausführungsform des erfindungsgemäßen Schweißhilfsfügeteils ist der Klemmring an der dem Stanzschaft zugewandten Seite benachbart zu einer radial verlaufenden inneren Ringfläche an der Kopfunterseite und/oder benachbart zu mindestens einem geschlossen oder durchbrochen um den Stanzschaft umlaufenden und axial in Richtung Stanzschaft vorstehenden Innenring an der Kopfunterseite des Elementkopfes angeordnet. In diesem Zusammenhang ist es weiterhin bevorzugt, dass der mindestens eine Innenring die Form eines Klemmrings oder eines Prägerings aufweist.

In vergleichbarer Weise, wie es oben in Bezug auf die radial außen liegende Unterseite des Elementkopfes bezogen auf den Klemmring beschrieben worden ist, weist die radiale Innenseite bezogen auf den Klemmring ebenfalls eine Ringfläche oder einen Innenring auf. Vorzugsweise ist die radial innen angeordnete Ringfläche eine Verbindungsfläche zwischen dem Stanzschaft und der radialen Innenseite des Klemmrings. Diese innere Ringfläche ist gemäß unterschiedlicher Ausgestaltungsmöglichkeiten auch unterschiedlich geformt, wie sich aus der folgenden Beschreibung ergibt. Gemäß einer Ausführungsform verläuft diese innere Ringfläche senkrecht zur Längsachse des Stanzschafts, vorzugsweise parallel zur Oberseite des Elementkopfes. Es ist ebenfalls bevorzugt, diese innere Ringfläche als eine den Stanzschaft umgebende Nut auszuformen. Entsprechend weist die innere Ringfläche eine um den Stanzschaft umlaufende Vertiefung in Richtung der Oberseite des Elementkopfes auf. Diese Vertiefung oder Nut dient vorzugsweise der Aufnahme von durch den Klemmring während des Fügens des Schweißhilfsfügeteils verdrängten Materials in Richtung des Stanzschafts. Dieses verdrängte Material sammelt sich in dieser Vertiefung und führt je nach Größe des Aufnahmevolumens dieser Vertiefung oder Nut zu entsprechenden radial einwärts, also auf den Stanzschaft gerichteten, mechanische Radialspannungen. Diese Radialspannungen klemmen oder halten das Schweißhilfsftigeteil innerhalb des Bauteils.

Es ist ebenfalls bevorzugt, innerhalb des Klemmrings einen Innenring vergleichbarer Formgestaltung wie der oben beschriebene Außenring anzuordnen. Vorzugsweise weist dieser Innenring die Form eines weiteren Klemmrings oder die Form eines Prägerings auf. Entsprechend trägt ein weiterer Klemmring als Innenring ebenfalls zur Befestigung des Schweißhilfsfügeteils bei. Es ist zudem bevorzugt, dass ein als Innenring eingepresster Prägering zur Abdichtung der Fügestelle beiträgt. Eine weitere bevorzugte Funktion eines inneren Prägering besteht darin, dass vorzugsweise dieser Prägering eine Materialflussblockade für das durch den Klemmring verdrängte Material darstellt. Somit würde der Klemmring durch radial einwärts gerichtete Radialspannungen am Prägering ebenfalls zur Befestigung des Schweißhilfsfügeteils im Bauteil beitragen.

Gemäß einer bevorzugten Ausführungsform des erfindungsgemäßen Schweißhilfsfügeteils ist die axiale Querschnittsform des Klemmrings durch eine radial innere Ringseite und eine radial äußere Ringseite gebildet, deren innere Ringseite mit der Längsachse des Stanzschafts, einen Neigungswinkel α im Bereich von 10° ≤ α ≤ 70°, vorzugsweise 50° einschließt.

Die innere Ringseite des Klemmrings ist dem vorzugsweise zylindrischen Stanzschaft zugewandt. Entsprechend sorgt die Neigung der radial inneren Ringseite für die Stärke und die Ausrichtung des verdrängten Materialflusses in Richtung des Stanzschafts. Je nach zu verdrängendem Material des ersten Bauteils ist es daher beispielsweise bevorzugt, den Winkel der radial inneren Ringseite so einzustellen, dass eine optimale Klemmung des Stanzschafts durch die Materialverdrängung erzielt wird. Durch diese gezielte Einstellung der Neigung der radial inneren Ringseite in Bezug auf die Längsachse des Stanzschafts sind ebenfalls bevorzugt die wirkenden Druckspannungen zwischen der radialen Außenseite des Stanzschafts und der radial inneren Ringseite beeinflussbar. Dies unterstützt vorteilhaft das verlässliche Einpressen des Schweißhilfsfügeteils in das erste Bauteil.

Gemäß einer weiteren bevorzugten Ausführungsform vorliegender Erfindung schließt die äußere Ringseite des Klemmrings mit der umgebenden äußeren Ringfläche der Kopfunterseite des Elementkopfes einen Winkel β im Bereich von 70° ≤ β ≤ 110° ein. Vorzugsweise hat der Winkel β eine Größe von ungefähr 90 ° oder im Bereich von 80 ° bis 85 °.

Wie oben bereits erläutert worden ist, ist der Klemmring mit einem gewissen Abstand zur radialen Umlauffläche des Elementkopfes angeordnet. Dies stellt sicher, dass zwar der Klemmring eine Materialverdrängung radial auswärts in Bezug auf den Stanzschaft hervorrufen kann, dieses verdrängte Material aber weiterhin unterhalb des Elementkopfes, also in Einpressrichtung, zur Befestigung des Schweißhilfsfügeteils beiträgt.

Entsprechend ist es bevorzugt, auch die Neigung der äußeren Ringseite zu variieren, um den Materialfluss auf das Bauteilmaterial abzustimmen und/oder um einen weiteren unterstützenden Effekt bei der Befestigung des Schweißhilfsfügeteils im ersten Bauteil zu erzielen. In diesem Zusammenhang ist es weiterhin bevorzugt, dass der Winkel β einen rechten Winkel bildet. Diese rechtwinklige Anordnung reduziert zwar einen radial nach außen gerichteten Materialfluss auf ein Minimum. Gleichzeitig sorgt diese rechtwinklige Ausrichtung aber auch für eine laterale bzw. radiale Stabilisierung des Schweißhilfsfügeteils innerhalb des Bauteilmaterials des ersten Bauteils.

Weiterhin bevorzugt ist die Querschnittsform des Klemmrings einem rechtwinkligen Dreieck angenähert, dessen Hypotenuse dem Stanzschaft zugewandt ist.

Gemäß der oben beschriebenen bevorzugten Querschnittsform des Klemmrings ist die Hypotenuse dieser Querschnittsform in Richtung Stanzschaft gerichtet. Zudem ist vorzugsweise die eine Kathete der dreieckförmigen Querschnittsform senkrecht zur Unterseite des Elementkopfes und somit bevorzugt parallel zur radialen Außenseite angeordnet. Mithilfe dieser Formgestaltung des Klemmrings wird der durch den Klemmring erzeugte Materialfluss fast vollständig auf den Stanzschaft gerichtet. Somit erzielt auch diese bevorzugte Formgestalt eine stärkere Befestigung des Schweißhilfsfügeteils im Bauteil.

Gemäß einer weiteren bevorzugten Ausführungsform ist der oben beschriebene Innenring und/oder der Außenring als Prägering ausgebildet, der eine ballige Querschnittsform umfasst. Diese baldige Querschnittsform ist bevorzugt symmetrisch zu einer Mittellinie der Querschnittsform ausgebildet. Auf diese Weise entsteht beim Einpressen des Schweißhilfsfügeteils in das Bauteil eine Materialverdrängung, die gleichmäßig radial auswärts und radial einwärts gerichtet ist.

Gemäß einer weiteren bevorzugten Ausführungsform des erfindungsgemäßen Schweißhilfsfügeteils ist an der Kopfunterseite nur ein geschlossen um den Stanzschaft umlaufender Klemmring angeordnet, der in einem ersten Radialabstand zum Stanzschaft positioniert ist, eine dreiecksähnliche Querschnittsform besitzt, die sich in axialer Richtung des Stanzschafts verjüngt, und der an einer vom Stanzschaft abgewandten Seite eine radial verlaufende äußere Ringfläche an der Kopfunterseite aufweist, die in die Umlauffläche des Elementkopfes übergeht.

Gemäß einer weiteren bevorzugten Ausführungsform des erfindungsgemäßen Schweißhilfsfügeteils ist an der Kopfunterseite zwischen dem Stanzschaft und dem benachbarten Klemmring oder einem benachbarten Prägering eine Nut vertieft in Richtung Elementkopf vorgesehen.

Wie es oben bereits beschrieben worden ist, dient diese Nut oder Vertiefung der Aufnahme verdrängten Materials, welches durch den Klemmring oder einen Prägering in Richtung Stanzschaft verdrängt worden ist. Diese Nut ist in ihrer Tiefe innerhalb des Elementkopfes ausgeformt. Da diese Formgestaltung der Nut in Abhängigkeit vom Bauteilmaterial, von der Bauteilgeometrie und auch in Abhängigkeit von der Geometrie des Schweißhilfsfügeteils variabel gestaltbar ist, ist diese Nut auch an die jeweilige Verbindungssituation zwischen Schweißhilfsfügeteil und Bauteil anpassbar. Dies eröffnet die Möglichkeit, entsprechend der Menge des vom Klemmring verdrängten Materials das Aufnahmevolumen der Nut für das verdrängte Material passend einzustellen. Wird vorzugsweise das Aufnahmevolumen der Nut im Hinblick auf das Volumen des verdrängten Materials des Bauteils geringer ausgestaltet, ergeben sich stärkere Radialspannungen durch das verdrängte Material in Richtung des Stanzschafts. In gleicher Weise ist es bevorzugt, durch eine größere Tiefe der Nut eine Ansammlung von einem größeren Volumen an verdrängtem Bauteilmaterial in der Nähe des Stanzschafts und unterhalb des Elementkopfes zu realisieren. Diese größere Materialmenge, die bevorzugt verdichtet im Aufnahmevolumen der Nut vorliegt, sorgt für eine zusätzliche Stabilisierung der Verbindung zwischen dem Schweißhilfsfügeteil und dem Bauteil.

Die oben beschriebene gezielte Anpassung des Aufnahmevolumens der Nut äußert sich in der bevorzugten Ausgestaltung vorliegender Erfindung, dass der Elementkopf in Längsrichtung des Stanzschafts im Bereich der Nut eine größere Dicke als außerhalb der Nut und des Klemmrings und/oder des Prägerings aufweist.

Gemäß einer weiteren bevorzugten Ausführungsform vorliegende Erfindung ist ein Verhältnis eines Kopfdurchmessers des Elementkopfes zu einem Schaftdurchmesser des zylindrischen Stanzschafts ≥ 2. Es ist weiterhin bevorzugt, dass ein Schaftdurchmesser D₁₀ des Stanzschafts im Vergleich zu einem Außendurchmesser D₄₀ des Klemmrings ungefähr 0,5 D₄₀≤D₁₀≤ 0,8 D₄₀ ist. Gemäß einer anderen bevorzugten Ausführungsform weist der Stanzschaft einen Schaftdurchmesser D₁₀ im Bereich von 3 mm≤D₁₀≤5 mm, vorzugsweise 4 mm, der Elementkopf einen Kopfdurchmesser D₃₀ im Bereich von 7 mm≤D₃₀≤12 mm, vorzugsweise 10 mm, und der Klemmring einen Ringdurchmesser D₄₀ im Bereich von 4 mm≤D₄₀≤10 mm, vorzugsweise 8 mm, auf. Des Weiteren besitzt der Elementkopf bevorzugt eine axiale Dicke H₃₀ zwischen Kopfoberseite und Kopfunterseite außerhalb einer Nut oder eines Rings im Bereich von 0,8 mm≤H₃₀≤1,8 mm, vorzugsweise 1,2 mm, und der Stanzschaft eine Länge h₁₀ im Bereich von 1,6 mm≤h₁₀≤4 mm, vorzugsweise 2,9 mm oder 2 mm oder 1,7 mm. Gemäß einer weiteren bevorzugten Ausführungsform vorliegender Erfindung hat der Klemmring eine Höhe H₄₀ in Bezug auf die Kopfunterseite im Bereich von 0,2 mm≤H₄₀≤0,6 mm, vorzugsweise 0,4 mm. Zudem hat bevorzugt die Nut im Vergleich zu einer Höhe eines unmittelbar benachbarten Klemmrings oder Prägerings eine Tiefe tso im Bereich von 0,2 mm≤t₅₀≤0,6 mm, vorzugsweise 0,3 mm. Gemäß einer weiteren bevorzugten Ausführungsform vorliegender Erfindung hat der Klemmring eine Höhe H₄₀ in Bezug auf die Kopfunterseite im Bereich von 0,15 mm≤H₄₀≤1 mm, vorzugsweise 0,5 mm.

Vorliegende Erfindung umfasst zudem eine weitere bevorzugte Ausführungsform des Schweißhilfsfügeteils. In dieser Ausführungsform ist der Elementkopf zumindest radial auswärts ab dem Klemmring als ein Senkkopf ausgebildet ist. Der Senkkopf umfasst eine radial auswärts abnehmende axiale Dicke H₃₀' zwischen Kopfoberseite und Kopfunterseite außerhalb einer Nut oder eines Rings im Bereich von 0,3 mm ≤ H₃₀'≤ 0,8 mm, vorzugsweise 0,4 mm≤ H₃₀'≤ 0,5 mm. Zudem weist der Stanzschaft gemessen zwischen freiem Schaftende und der radial äußersten Kopfunterseite eine Länge h₁₀' im Bereich von 1,4 mm ≤ h₁₀' ≤ 3 mm auf, vorzugsweise von 1,4 mm ≤ h₁₀' ≤ 2,2 mm und weiter bevorzugt von 1,4 mm ≤ h₁₀' ≤ 1,6 mm

Im Vergleich zum oben beschriebenen Schweißhilfsfügeteil weist diese Ausführungsform eine geringere Bauhöhe in Kombination mit einem Senkkopf auf. Dies ermöglicht eine Reduktion der Störkontur des nach dem Setzvorgang an der Bauteiloberfläche überstehenden Elementkopfes. Der Senkkopf zeichnet sich durch eine radial auswärts bevorzugt kontinuierlich abnehmende Elementkopfdicke aus. Zudem ist die Höhe des Elementkopfes geringer gewählt, um hier eine sich ergänzende Wirkung von Senkkopf und axialer Elementlänge zu erzielen. Ebenfalls im Sinne der Elementgestaltung für dünne Bauteile oder für in das Bauteil tiefer eingetriebene Schweißhilfsfügeteile ist der Schaft kürzer ausgebildet als in der oben beschriebenen Ausführungsform. Somit ist gerade bei dünnen Bauteilen gewährleistet, dass der Elementkopf und das Ende des Elementschafts nur geringfügig an der jeweiligen Bauteiloberfläche überstehen.

Weiter bevorzugt weist der Klemmring des Schweißhilfsfügeteils mit Senkkopf eine Höhe H₄₀ in Bezug auf die an den Klemmring angrenzende Kopfunterseite im Bereich von 0,2 mm ≤ H₄₀ ≤ 1 mm, vorzugsweise 0,6 mm und weiter bevorzugt 0,4 mm, auf. Die Geometrieeigenschaften des Klemmrings entsprechend somit bei dem Element mit Senkkopf den bereits oben beschriebenen Geometrieeigenschaften des Elements ohne Senkkopf.

Gemäß einer weiteren bevorzugten Ausführungsform des Schweißhilfsfügeteils wird die Schweißkontaktzone durch eine Schweißwarze gebildet, die in axialer Richtung über den Stanzschaft hinaus ragt und eine geringere radiale Ausdehnung als der Stanzschaft aufweist. Gemäß einer weiteren bevorzugten Ausführungsform wird die Schweißkontaktzone durch einen konvexen Schweißbuckel gebildet, der in axialer Richtung über den Stanzschaft hinaus ragt und die gleiche radiale Ausdehnung wie der Stanzschaft aufweist.

Zum Herstellen einer Schweißverbindung zwischen dem Schweißhilfsfügeteil und einem zweiten Bauteil ist es entscheidend, dass die Schweißkontaktzone über das erste Bauteil hinaus ragt. Denn aufgrund dieser geometrischen Konfiguration ist es möglich, einen elektrischen Kontakt zwischen dem Schweißhilfsfügeteil und dem zweiten Bauteil herzustellen. Mithilfe dieses elektrischen Kontakts wird dann das Widerstandsschweißen durchgeführt. Es hat sich herausgestellt, dass eine Schweißkontaktzone in der radialen Ausdehnung des gesamten Stanzschaftes unvorteilhaft für die Ausbildung einer verbindungserzeugenden Schweißlinse ist. Daher ist die Schweißkontaktzone in einer geringeren radialen Ausdehnung als der Au-ßendurchmesser des Stanzschafts vorgesehen. Gemäß einer bevorzugten Ausführungsform wird die Schweißkontaktzone durch eine Schweißwarze, also einen in entgegengesetzter Richtung zum Elementkopf vorstehenden Buckel, gebildet. Dieser Buckel hat eine geringere radiale Ausdehnung als der Stanzschaft. Bevorzugt ist der Buckel mittig am freien Ende des Stanzschafts angeordnet. Eine das Widerstandsschweißen unterstützende Form ist beispielsweise spitz, halbkugelförmig, kegelförmig oder kegelstumpfförmig sowie pyramidenförmig oder pyramidenstumpfförmig. Es ist ebenfalls denkbar, dass die Schweißwarze durch mehrere nebeneinander angeordnete spitze Vorsprünge gebildet wird.

Gemäß der oben genannten zweiten Alternative weist das freie Ende des Stanzschaftes eine abgerundete und vom Elementkopf weg gewölbte Form auf. Diese Wölbung, die bevorzugt die Form eines Kugelsegments aufweist, würde ebenfalls einen punktförmigen Kontakt zu einem zweiten Bauteil herstellen, um auf dieser Grundlage das Widerstandsschweißen durchzuführen. Wie man anhand der Diskussion der Schweißkontaktzone erkennen kann, wird die Länge des Stanzschaftes bis zum Beginn der Schweißkontaktzone gemessen. Dieses Ende ist bevorzugt gleichzusetzen mit dem Ende einer zylindrischen Mantelfläche des Stanzschafts. Entsprechend ragt dann die Schweißkontaktzone bzw. der Schweißkontaktbereich über die Länge des Stanzschaftes hinaus. Es ist ebenfalls bevorzugt, die vollständige Länge des Stanzschafts zu betrachten, die die Schweißkontaktzone einbezieht.

Gemäß einer weiteren bevorzugten Ausführungsform weist der Elementkopf im Bereich der Ringfläche eine geringere axiale Dicke als in einem Radialbereich zwischen dem Klemmring und dem Stanzschaft auf, vorzugsweise im Bereich der Nut. Mithilfe dieser bevorzugten Formgebung ist es ebenfalls möglich, die Klemmkräfte aufgrund des durch den Klemmring verdrängten Materials am Stanzschaft zu erhöhen. Denn eine geringere axiale Dicke im Radialbereich zwischen dem Klemmring und dem Stanzschaft verringert das Volumen, in dem verdrängtes Material aufgenommen werden kann. Entsprechend wird das verdrängte Material stärker komprimiert und sorgt für erhöhte Klemmkräfte am Stanzschaft.

Des Weiteren sorgt die gezielte Dickengestaltung des Elementkopfes angrenzend an den Stanzschaft und radial außen angrenzend an den Klemmring für eine höhere Stabilität gegen Scherbelastung. Die Scherbelastung wirkt senkrecht zum Stanzschaft. Sie tritt bspw. auf, wenn das Bauteil, in welches das Schweißhilfsfügeteil gesetzt worden ist, gegen ein zweites Bauteil entlang der angrenzenden Oberflächen der aneinander angrenzenden Bauteile verschoben wird, mit welchem das Schweißhilfsfügeteil verschweißt worden ist. Während dieser Schwerbelastung sorgt der radial innerhalb des Klemmrings angeordnete dicke Bereich des Elementkopfs für eine zusätzliche stabilisierende Abstützung am radial außerhalb des Klemmrings angeordneten weniger dicken Bereich des Elementkopfs. Durch diese abgestuften Dickenbereiche des Elementkopfs wird bevorzugt die Verbindung zwischen dem Schweißhilfsfügeteil und dem an dieses angrenzende Bauteil verstärkt, vorzugsweise ein Bauteil aus schlecht schweißbarem Material, wie Aluminium, einer Legierung, Kunststoff, Laminat oder einem Verbundwerkstoff.

Vorliegende Erfindung umfasst zudem einen Bauteilverbund aus einem ersten Bauteil und dem oben genannten Schweißhilfsfügeteil in einer seiner bevorzugten Ausgestaltungen. Bevorzugt besteht das Bauteil aus einem schlecht schweißbaren Material, wie Aluminium oder Kunststoff. Das Schweißhilfsfügeteil wird derart in das Bauteil eingepresst, dass es verliersicher daran befestigt ist. Dies eröffnet die Möglichkeit, den Bauteilverbund sofort oder erst nach einem Transport an einem anderen Verarbeitungsort weiter zu verarbeiten. Gemäß einer weiteren bevorzugten Ausführungsform umfasst vorliegende Erfindung eine Verbindung aus dem ersten Bauteil mit dem Schweißhilfsfügeteil, dass über eine Schweißverbindung mit einem zweiten Bauteil verbunden worden ist.

Des Weiteren offenbart vorliegende Erfindung ein Herstellungsverfahren für einen Bauteilverbund aus zumindest einem ersten Bauteil und dem Schweißhilfsfügeteil gemäß einer der oben beschriebenen bevorzugten Ausführungsformen. Vorzugsweise dient das Herstellungsverfahren zur Herstellung einer Fahrzeugkarosserie mithilfe des oben beschriebenen Schweißhilfsfügeteils. Das genannte Herstellungsverfahren weist die folgenden Schritte auf: Bereitstellen des ersten Bauteils vorzugsweise aus schlecht schweißbarem Material, annähernd drehungsfreies Einpressen des Schweißhilfsfügeteils in das erste Bauteil, sodass der Stanzschaft das Bauteil vollständig durchdringt, die Schweißkontaktzone eine dem Elementkopf abgewandte Bauteilseite überragt und der Elementkopf an einer dem Elementkopf zugewandten Bauteilseite anliegt und dadurch der Klemmring in die zugewandte Bauteilseite eingedrückt wird.

Um eine Schweißverbindung zwischen einem ersten Bauteil und einem zweiten Bauteil herstellen zu können, wird das erste Bauteil mit dem oben beschriebenen Schweißhilfsfügeteil ausgestattet. Zu diesem Zweck wird das erste Bauteil derart bereitgestellt, dass das oben beschriebene Schweißhilfsfügeteil in dieses Bauteil eingepresst werden kann. Vorzugsweise besteht das erste Bauteil aus nicht oder schlecht schweißbarem Material. In diesem Fall bildet dann das elektrisch leitende Schweißhilfsfügeteil die Grundlage dafür, um ein Widerstandsschweißverfahren auch mit einem ersten Bauteil aus nicht oder schlecht schweißbarem Material herstellen zu können. Um tatsächlich das erste Bauteil mit einem zweiten Bauteil fest verschweißen zu können, wird das Schweißhilfsfügeteil in dem ersten Bauteil fest verankert. Zu diesem Zweck wird eine mechanische Druckkraft auf den Elementkopf des Schweißhilfsfügeteils ausgeübt, sodass der Stanzschaft in das erste Bauteil eingepresst wird. Dies hat zur Folge, dass der Stanzschaft das erste Bauteil vollständig durchdringt. Entsprechend ragt dann die Schweißkontaktzone an der dem Elementkopf abgewandten Bauteilseite des ersten Bauteils über diese hinaus. Während des Einpressens wird ebenfalls die Kopfunterseite des Elementkopfes derart gegen die dem Elementkopf zugewandte Bauteilseite gedrückt, dass der Klemmring in das erste Bauteil eingedrückt wird. Der dadurch ausgelöste Materialfluss radial einwärts in Richtung des Stanzschafts sorgt für ein Klemmen des Stanzschafts durch das verdrängte Material des ersten Bauteils.

Erfindungsgemäß bevorzugt umfasst das Herstellungsverfahren die folgenden weiteren Schritte: Anordnen des ersten Bauteils mit Schweißhilfsfügeteil über einem zweiten Bauteil derart, dass ein elektrischer Kontakt zwischen der Schweißkontaktzone des Stanzschafts und dem zweiten Bauteil herstellbar ist, und Widerstandsschweißen des Schweißhilfsfügeteils und des zweiten Bauteils.

Des Weiteren sieht das erfindungsgemäße Herstellungsverfahren bevorzugt vor, dass das Schweißhilfsfügeteil nach dem Einpressen verliersicher im ersten Bauteil befestigt ist. Auf dieser Grundlage liegt das erste Bauteil mit Schweißhilfsfügeteil als Halbzeug vor und kann einer weiteren Verarbeitung direkt vor Ort, nach einer Zwischenlagerung oder an einem anderen Ort nach einem zeitlich dazwischen stattgefundenen Transport zugeführt werden. Entsprechend umfasst das Herstellungsverfahren dann auch bevorzugt das Widerstandsschweißen des Halbzeugs mit dem zweiten Bauteil am Herstellungsort des Einpressens und/oder nach einem Zwischenlagern des Halbzeugs nach dem Einpressen oder nach einem Transport vom Herstellungsort des Einpressens zu einem Verarbeitungsort zum Widerstandsschweißen.

Wie man anhand der obigen bevorzugten Verfahrensschritte erkennen kann, bietet das Herstellungsverfahren für den Bauteilverbund einerseits eine hohe Flexibilität in der Vorbereitung der tatsächlichen Verbindung mit dem zweiten Bauteil und eine weitere Flexibilität in der Organisation des Verbindens mit dem zweiten Bauteil. Denn während das Halbzeug bestehend aus erstem Bauteil und Schweißhilfsfügeteil die wesentliche Grundlage für den Bauteilverbund bildet, ist dieser Bauteilverbund an beliebiger Stelle mithilfe eines Widerstandsschweißverfahrens realisierbar. Denn das erste Bauteil mit Schweißhilfsfügeteil lässt sich vor Ort oder nach einem erforderlichen Transport an beliebiger anderer Stelle ohne Weiteres mit einem bekannten Widerstandsschweißverfahren mit dem zweiten Bauteil aus bevorzugt schweißbarem Material oder ebenfalls mit einem Schweißhilfsfügeteil ausgestattet herstellen.

Gemäß einer weiteren bevorzugten Ausführungsform des erfindungsgemäßen Herstellungsverfahrens für den Bauteilverbund wird durch das Einpressen des Klemmrings in das erste Bauteil ein Materialanteil des ersten Bauteils radial einwärts verdrängt, sodass der Stanzschaft durch das verdrängte Material geklemmt wird.

Vorliegende Erfindung umfasst zudem ein Herstellungsverfahren für das Schweißhilfsfügeteil. Im Rahmen dieses Herstellungsverfahrens wird ein Stabprofil in die Geometrie des Schweißhilfsfügeteils geformt, vorzugsweise mittels Kaltschlagen oder Kaltwalzen, und danach wird das Schweißhilfsfügeteil vom Stabprofil abgelängt.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine teilweise Schnittansicht einer bevorzugten Ausführungsform des Schweißhilfsfügeteils vorliegender Erfindung,
- Figur 2: eine Ausschnittsvergrößerung des eingekreisten Bereichs aus Figur 1,
- Figur 3: eine teilweise Schnittansicht einer weiteren bevorzugten Ausführungsform des Schweißhilfsfügeteils mit Senkkopf,
- Figur 4: eine Ausschnittsvergrößerung des eingekreisten Bereichs aus Figur 5,
- Figur 5: eine Ausschnittsvergrößerung einer weiteren bevorzugten Ausgestaltung der Unterseite des Elementkopfes mit einem ersten und einem zweiten Klemmring,
- Figur 6: eine Ausschnittsvergrößerung einer weiteren bevorzugten Ausgestaltung einer Unterseite des Elementkopfes mit einem ersten und einem zweiten Klemmring,
- Figur 7: eine Ausschnittsvergrößerung einer weiteren bevorzugten Ausgestaltung der Unterseite des Elementkopfes mit einem Klemmring und einem radial auswärts davon angeordneten Prägering,
- Figur 8: eine Ausschnittsvergrößerung einer weiteren bevorzugten Ausgestaltung der Unterseite des Elementkopfes mit einem Klemmring und einem radial auswärts dazu angeordneten Prägering,
- Figur 9: eine Ausschnittsvergrößerung einer weiteren bevorzugten Ausgestaltung der Unterseite des Elementkopfes mit einem Prägering und einem radial auswärts davon angeordneten Klemmring,
- Figur 10: eine Ausschnittsvergrößerung eines nicht erfindungsgemäßen Beispiels der Unterseite des Elementkopfes mit einem Prägering und einem radial auswärts dazu angeordneten Klemmring,
- Figur 11: eine Ausschnittsvergrößerung einer weiteren bevorzugten Ausgestaltung der Unterseite des Elementkopfes mit einem ersten und einem zweiten Klemmring und einem radial auswärts dazu angeordneten Prägering,
- Figur 12: eine Ausschnittsvergrößerung einer weiteren bevorzugten Ausgestaltung der Unterseite des Elementkopfes mit einem ersten und einem zweiten Klemmring und einem radial auswärts dazu angeordneten Prägering,
- Figur 13: eine Ausschnittsvergrößerung einer weiteren bevorzugten Ausgestaltung der Unterseite des Elementkopfes mit einem radial innen angeordneten Klemmring, einem radial auswärts dazu angeordneten Prägering und einem zum Prägering radial auswärts angeordneten weiteren Klemmring,
- Figur 14: eine weitere bevorzugte Ausführungsform einer Ausgestaltung der Unterseite des Elementkopfes mit einem radial innen angeordneten Klemmring, einem radial auswärts dazu angeordneten Prägering und einem radial außen angeordneten weiteren Klemmring,
- Figur 15: eine Ausschnittsvergrößerung einer weiteren bevorzugten Ausgestaltung der Unterseite des Elementkopfes mit einem radial innen angeordneten Prägering, der durch zwei radial außen angeordnete Klemmringe umgeben ist,
- Figur 16: eine Ausschnittsvergrößerung einer weiteren bevorzugten Ausgestaltung der Unterseite des Elementkopfes mit einem radial innen angeordneten Prägering und zwei diesen umgebende Klemmringe,
- Figur 17: eine Ausschnittsvergrößerung einer weiteren bevorzugten Ausführungsform einer Ausgestaltung der Unterseite des Elementkopfes mit einem radial innen angeordneten Prägering und einem radial außen angeordneten weiteren Prägering und einem zwischen den beiden Prägeringen angeordneten Klemmring,
- Figur 18: eine Ausschnittsvergrößerung einer weiteren bevorzugten Ausgestaltung der Unterseite des Elementkopfes mit einem radial innen angeordneten ersten Prägering und einem radial außen angeordneten zweiten Prägering und einem zwischen den Prägeringen angeordneten Klemmring.

### 5. Detaillierte Beschreibung der bevorzugten Ausführungsformen

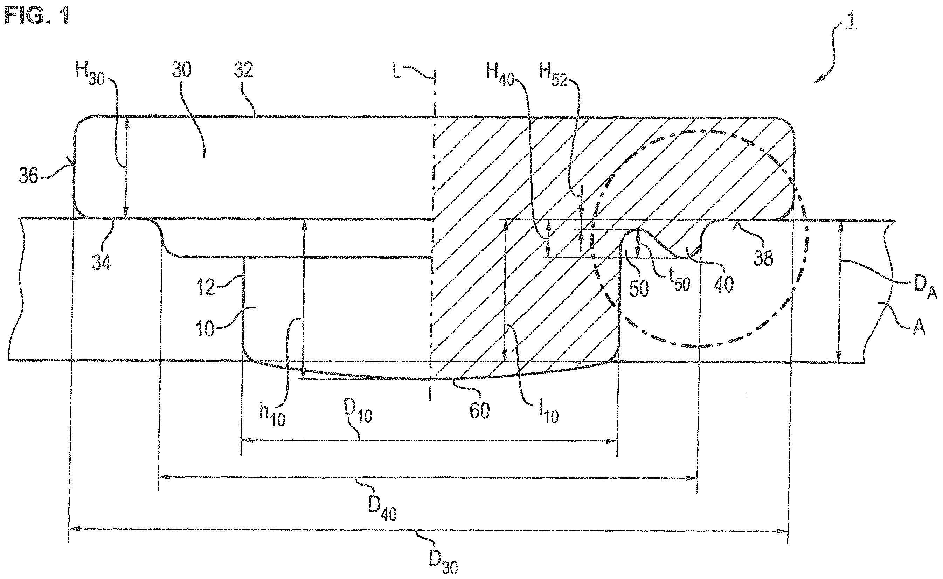

Eine bevorzugte Ausführungsform des Schweißhilfsfügeteils 1 gemäß vorliegender Erfindung zeigt Figur 1 in einer teilweisen Schnittdarstellung. Das Schweißhilfsfügeteil 1 besteht aus bekannten schweißbaren Materialien, die entsprechend dem verwendeten Schweißverfahren ausgewählt werden. Im Hinblick auf das bevorzugt eingesetzte Widerstandspunkt- und -buckelschweißen sind legierte Stähle geeignet. Hier sind aber auch andere Materialien einsetzbar.

Das Schweißhilfsfügeteil 1 umfasst einen Stanzschaft 10, der sich parallel zu einer Längsachse L des Schweißhilfsfügeteils 1 erstreckt. Der Stanzschaft 10 ist dafür ausgelegt, um in ein erstes Bauteil A annähernd drehungsfrei eingepresst bzw. eingestanzt zu werden. Dabei ist das Schweißhilfsfügeteil 1 selbstlochend, so dass das Schweißhilfsfügeteil 1 in nicht vorgelochte Bauteile genauso wie in vorgelochte Bauteile eingepresst oder eingestanzt werden kann. Entsprechend ist das Schweißhilfsfügeteil 1 bevorzugt als Vollstanzniet konfiguriert, um ein zeitsparendes und verlässliches Fügen in ein Bauteil A zu gewährleisten. Da das Vollstanznieten im Stand der Technik bekannt ist, sind auch die zum Vollstanznieten verwendeten Setzgeräte zum Setzen des Schweißhilfsfügeteils 1 einsetzbar.

Wie man anhand der schematischen Darstellung in Figur 1 erkennen kann, ist das Schweißhilfsfügeteil 1 bevorzugt rotationssymmetrisch um seine Längsachse L ausgebildet. Dabei hat der Stanzschaft 10 eine zylindrische Form und bevorzugt einen Durchmesser D₁₀ im Bereich von 3 mm ≤ D₁₀ ≤ 8 mm, vorzugsweise 4 mm ≤ D₁₀ ≤ 5 mm und weiter bevorzugt D₁₀ = 4 mm oder D₁₀ = 5 mm. Die zylindrische Form zeichnet sich durch eine glatte Mantelfläche 12 aus. Erfindungsgemäß bevorzugt weist die Mantelfläche 12 quer zur Längsachse L verlaufende Halterippen oder Halteringe (nicht gezeigt) auf, die eine Befestigung des Stanzschafts 10 in einer Bauteilöffnung unterstützen. Alternativ zur zylindrischen Form des Stanzschafts 10 weist dieser die Form eines Kegelstumpfes auf, der sich in Fügerichtung aufweitet. Weiter bevorzugt ist der Stanzschaft 10 im Querschnitt nicht rotationssymmetrisch geformt. Dadurch wird ein Formschluss gegen Relativdrehung zwischen Bauteil A und Schweißhilfsfügeteil 1 realisiert.

Der Stanzschaft 10 umfasst an seinem freien axialen Ende eine Schweißkontaktzone 60. Die Schweißkontaktzone 60 erstreckt sich über eine Länge L₁₀ des Stanzschafts 10 hinaus, um beim bevorzugten Widerstandsschweißen einen elektrischen Kontakt zum zu verschweißenden zweiten Bauteil herzustellen. Auf die Gestaltung der Schweißkontaktzone 60 wird unten näher eingegangen.

Am zweiten axialen Ende des Stanzschafts 10 ist ein Elementkopf 30 vorgesehen, der integral mit dem Stanzschaft 10 ausgebildet ist. Der Elementkopf 30 umfasst eine Kopfoberseite 32, die bevorzugt eben ausgebildet ist. Sie dient auch als Angriffsfläche für einen Stanzstempel (nicht gezeigt), der das Schweißhilfsfügeteil 1 in das Bauteil A einpresst.

Angrenzend an den Stanzschaft 10 weist der Elementkopf 30 eine Kopfunterseite 34 auf. Die Kopfunterseite 34 ist über eine Umlauffläche 36 mit der Kopfoberseite 32 verbunden. Die Umlauffläche 36 bildet bevorzugt eine zylindrische Mantelfläche des Elementkopfes 30. Entsprechend definiert sie den Durchmesser des Elementkopfes 30 und verläuft entlang einer Umrisslinie des Elementkopfes 30. Der Elementkopf 30 hat einen bevorzugten Durchmesser D₃₀ im Bereich von 7 mm ≤ D₃₀ ≤ 12 mm, bevorzugt D₃₀ = 10 mm. Zudem hat er eine bevorzugte Höhe H₃₀ im Bereich von 0,8 mm ≤ H₃₀ ≤ 1,8 mm, bevorzugt H₃₀ = 1,2 mm. Bezogen auf den Stanzschaft 10 hat der Elementkopf 30 einen Durchmesser D₃₀ ≥ 1,4 · D₁₀.

Sollte es von Vorteil sein, kann die Umlauffläche 36 auch anders geformt sein. Sie könnte bspw. die Form einer Kegelstumpfmantelfläche besitzen, wenn der Elementkopf 30 als Senkkopf ausgestaltet ist. Auch könnte sie ganz wegfallen, wenn die Kopfoberseite 32 einen Rundkopf bildet, der in die Unterseite 34 direkt übergeht.

Ebenfalls bevorzugt besitzt der Elementkopf 30 anstelle der in Figur 1 gezeigten zylindrischen Form eine kegelstumpfähnliche, eine pyramidenstumpfähnliche oder eine polyederähnliche Form. Im Hinblick auf ein Setzverfahren mithilfe eines Fügegeräts ist aber die zylindrische Form von Vorteil, da die zylindrische Umlauffläche 36 eine stützende Führungsfläche in einem bevorzugten Fügekanal des Fügegeräts darstellt.

An der Kopfunterseite 34 des Elementkopfes 30 ist konzentrisch zur Längsachse L und zum Stanzschaft 10 ein Klemmring 40 angeordnet. Der Klemmring 40 ragt vorzugsweise in axialer Richtung aus der Kopfunterseite 34 hervor. An der sonst ebenen Kopfunterseite 34 ist gemäß einer bevorzugten Ausführungsform nur ein Klemmring 40 vorgesehen. Dies gewährleistet einen ungehinderten radialen Materialfluss radial einwärts und radial auswärts, der nicht durch einen weiteren Klemmring oder Prägering (siehe unten) umgeleitet oder blockiert wird.

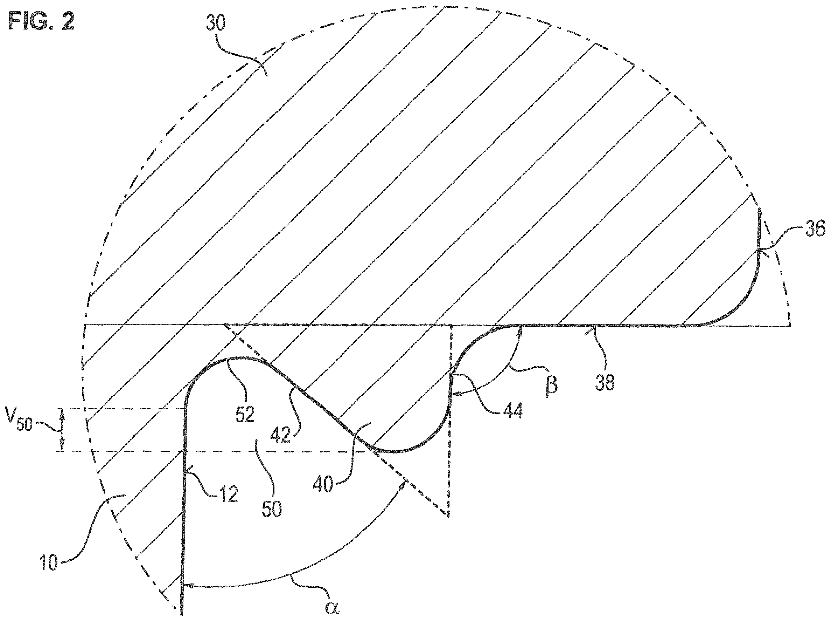

Vorzugsweise besitzt der Klemmring 40 eine dreiecksförmige Querschnittsgestalt, wie man anhand der gestrichelten Linien in Figur 2 erkennen kann. Figur 2 zeigt eine Ausschnittsvergrößerung des eingekreisten Bereichs aus Figur 1.

Die Querschnittsform des Klemmrings 40 wird durch eine radial innere Ringseite 42 und eine radial äußere Ringseite 44 definiert. Die Ringseiten 42, 44 definieren in Kombination mit der Kopfunterseite 34 die bevorzugte dreiecksähnliche Querschnittsform des Klemmrings 40. Der Klemmring 40 ist in einem ersten Radialabstand zur Mantelfläche 12 des Stanzschafts 10 angeordnet, auf den unten näher eingegangen wird. Radial auswärts wird der Klemmring 40 durch eine Ringfläche 38 umgeben, die einen Teil der Kopfunterseite 34 bildet. Die Ringfläche 38 ist bevorzugt eben und senkrecht zur Längsachse L ausgebildet. Zudem geht die Ringfläche 38 in die Umlauffläche 36 über, wodurch die Kopfunterseite 34 und die Kopfoberseite 32 miteinander verbunden sind.

Um das erste Bauteil A aus schlecht schweißbarem Material, wie beispielsweise Kunststoff oder Aluminium, mit dem zweiten Bauteil aus schweißbarem Material verschweißen zu können, wird das Schweißhilfsfügeteil 1 in das erste Bauteil A eingepresst oder eingestanzt. Das Bauteil A hat eine bevorzugte Dicke D_{A} im Bereich von 0,8 mm ≤ D_{A} ≤ 3 mm, vorzugsweise ist D_{A} = 1,5 mm. Dazu stützt sich das erste Bauteil A an einer Matrize, vorzugsweise mit einer zentralen Öffnung (nicht gezeigt), ab. Um das Setzverfahren so einfach wie möglich zu gestalten, wird das Schweißhilfsfügeteil 1 drehungsfrei in das erste Bauteil A eingepresst. Dazu bringt ein Setzstempel eine Fügekraft auf die Kopfoberseite 32 auf und presst das Schweißhilfsfügeteil 1 mit dem Stanzschaft 10 voraus in das Bauteil A ein. Dabei wird eine Öffnung im Bauteil A erzeugt, sodass die Schweißkontaktzone 60 an der kopfabgewandten Seite des Bauteils A über diese hinaus ragt (siehe Figur 1). Entsprechend ist die Länge h₁₀ des Stanzschafts 10 auf die Dicke D_{A} des Bauteils A abgestimmt. Daher ist es bevorzugt, dass die Länge h₁₀ des Stanzschafts 10 1,1 D_{A} ≤ h₁₀ ≤ 2 D_{A} beträgt, vorzugsweise 1,4 D_{A} ≤ h₁₀ ≤ 1,8 D_{A}. Der Stanzschaft 10 hat vorzugsweise eine Länge h₁₀ im Bereich von 1,6 mm ≤ h₁₀ ≤ 4 mm, insbesondere h₁₀ = 2 mm. Zudem hat der Elementkopf 30 eine bevorzugte Höhe H₃₀ bezogen auf die Bauteildicke D_{A} von 0,5 D_{A} ≤ H₃₀ ≤ 2 D_{A}, vorzugsweise gilt H₃₀=D_{A}.

Während des Setzvorgangs wird das Schweißhilfsfügeteil 1 so weit in das Bauteil A gepresst, bis zumindest die Kopfunterseite 34 mit der Ringfläche 38 auf der kopfzugewandten Bauteilseite aufliegt. Es ist ebenfalls bevorzugt, den Elementkopf 30 tiefer in das Bauteil A einzupressen, so dass ein Teil des Elementkopfes 30 im Bauteil A aufgenommen ist. Während dieses Setzvorgangs wird der Klemmring 40 ebenfalls in das Bauteil A eingepresst.

Gemäß der Erfindung ist die radial innere Ringseite 42 in einem Winkel α geneigt bezogen auf die Mantelfläche 12 oder die Längsachse L angeordnet. Da die Ringseite 42 in einem Winkel α < 90° bezogen auf die Mantelfläche 12 angeordnet ist, verdrängt die Ringseite 42 beim Einpressen in das Bauteil A Material des Bauteils A in Richtung des Stanzschafts 10. Gerade der radiale Anteil des verdrängten Bauteilmaterials drückt gegen den Stanzschaft 10 und sorgt für eine zusätzliche Klemmwirkung und Haltekraft des Stanzschafts 10 im Bauteil A aufgrund von mechanischen Radialspannungen. Vorzugsweise nimmt die Klemmwirkung mit zunehmender radial einwärts gerichteter Materialverdrängung zu. Daher wird die Ringseite 42 gemäß der Erfindung in einem Winkelbereich von 10° ≤ α ≤ 70°, weiter bevorzugt von 40° ≤ α ≤ 60°, insbesondere α = 45° oder α = 50°, angeordnet.

Die bevorzugte Klemmwirkung nimmt mit dem in Richtung des Stanzschafts 10 verdrängten Materialvolumens zu. Die Größe des Materialvolumens wird durch das Volumen des Klemmrings 40 bestimmt, welches über die Kopfunterseite 34 hinausragt. Daher ist es bevorzugt, eine Höhe H₄₀ des Klemmrings 40 zur Gestaltung des verdrängten Materialvolumens zu variieren. Die Höhe H₄₀ des Klemmrings 40 bezeichnet die Strecke, mit der der Klemmring 40 maximal über die Kopfunterseite 34 hinausragt (siehe Figur 1). Vorzugsweise besitzt der Klemmring 40 eine Höhe H₄₀ im Bereich von 0,2 mm ≤ H₄₀ ≤ 0,6 mm, bevorzugt H₄₀ = 0,4 mm.

Gemäß einer weiteren bevorzugten Ausführungsform besitzt der Klemmring 40 eine Höhe H₄₀ im Bereich von 0,15 mm ≤ H₄₀ ≤ 1 mm, bevorzugt H₄₀ = 0,5 mm. Mit dieser Höhenvariation ist der Klemmring flexibel anpassbar an größere wie an kleinere Blechdicken im Vergleich zur vorher beschriebenen Ausführungsform.

Des Weiteren hat der Klemmring 40, der sich konzentrisch um den Stanzschaft 10 erstreckt, einen bevorzugten Außendurchmesser D₄₀ im Bereich von 4 mm ≤ D₄₀ ≤ 10 mm, vorzugsweise ist D₄₀ = 8 mm. Im Hinblick auf das Bauteil A und bevorzugt abgestimmt auf dessen Abmessungen gilt für den Klemmring 40 0,2 · D_{A} ≤ H₄₀ ≤ 0,5 D_{A} sowie 3 · D_{A} ≤ D₄₀ ≤ 10 · D_{A}. Im Verhältnis zum Stanzschaft 10 gilt bevorzugt 0,5 · D₄₀ ≤ D₁₀ ≤ 0,8 · D₄₀.

Die bevorzugte Klemmwirkung wird durch radial einwärts gegen den Stanzschaft 10 drückendes verdrängtes Material des Bauteils A bestimmt. Dazu muss bevorzugt das verdrängte Material in einem Zwischenraum 50 zwischen der Mantelfläche 12 und der inneren Ringseite 42 gedrängt werden. Dieser Zwischenraum 50 wird vorzugsweise auch als Nut bezeichnet, die in Richtung des Elementkopfes 30 gewölbt ist.

Um diesen Zwischenraum 50 zu verringern und damit die Klemmwirkung durch verdrängtes Material zu steigern, besitzt der Zwischenraum 50 einen Grund 52. Der Grund 52 ist ein Flächensegment, welches die Mantelfläche 12 und die Ringseite 42 miteinander verbindet. Vorzugsweise ist der Grund 52 axial versetzt in Richtung der Schweißkontaktzone 60 angeordnet. Damit steht der Grund 52 in Bezug auf die Ringfläche 38 und die Kopfunterseite 36 in Setzrichtung vor. Damit wird bevorzugt der Raum zur Aufnahme radial einwärts verdrängten Materials gezielt verkleinert und die Klemmwirkung am Stanzschaft 10 verbessert. Vorzugsweise liegt die Tiefe t₅₀ der Nut 50 bezogen auf den höchsten Punkt des benachbarten Klemmrings 40 (siehe Fig. 1) im Bereich von 0,2 mm ≤ t₅₀ ≤ 0,4 mm, vorzugsweise t₅₀ = 0,3 mm. Es ist ebenfalls bevorzugt, die Tiefe t₅₀ der Nut 50 bezogen auf die Höhe H₄₀ des Klemmrings 40 gegenüber der Kopfunterseite 34 zu definieren. Daher gilt 0,6 · H₄₀ ≤ t₅₀ ≤ 1 · H₄₀.

Um das Schweißhilfsfügeteil 1 im Bauteil A zu stabilisieren, ist die radial äußere Ringseite 44 in Bezug auf die Ringfläche 38 in einem Winkel β im Bereich von 70° ≤ β ≤ 110° angeordnet. Aufgrund der Größe des Winkels β erstreckt sich die Ringseite 44 ungefähr in Setzrichtung. Auf diese Weise erzeugt die Ringseite 44 radiale Stabilität für das Schweißhilfsfügeteil 1 im Bauteil A.

Bezugnehmend auf die Querschnittsform des Klemmrings 40 und die Größe der Winkel α und β ist es besonders bevorzugt, dass die Querschnittsform annähernd ein rechtwinkliges Dreieck umfasst. Daher ist der Winkel β bevorzugt gleich 90°. Die Hypotenuse dieser Dreiecksform ist dem Stanzschaft 10 zugewandt, um einen vorteilhaften Materialfluss radial einwärts zu bewirken.

Zudem wird bevorzugt die Befestigung des Schweißhilfsfügeteils 1 im Bauteil A durch die Form der Nut 50 beeinflusst. Es hat sich als vorteilhaft und daher bevorzugt gezeigt, wenn die nach außen begrenzende Wand der Nut 50 einerseits durch die schräg geneigte Seite 42 des Klemmrings 40 und andererseits durch einen Vertikalabschnitt v₅₀ des Stanzschafts 10 gebildet wird. Der Vertikalabschnitt v₅₀ ist ein senkrecht zum Elementkopf 30 oder parallel zur Längsachse L des Schweißhilfsfügeteils 1 verlaufender Abschnitt der Mantelfläche des Stanzschafts 10. Dieser beginnt auf Höhe des Klemmrings 40 und verläuft in Richtung Elementkopf 30, bis ein verbindender krummliniger Verbindungsbereich, vorzugsweise ein Kreisbogen, zwischen dem Vertikalabschnitt v₅₀ und der Hypotenuse 42 des Klemmrings 40 beginnt (siehe Fig. 2). Vorzugsweise wird der Halt des Schweißhilfsfügeteils 1 im Bauteil A mit zunehmender Größe des Vertikalbereichs v₅₀ unterstützt. Entsprechend hat der Vertikalbereich v₅₀ eine Größe von 0≤v₅₀≤0,3 t₅₀, vorzugsweise v₅₀=0,1 t₅₀ oder v₅₀≥0,2 t₅₀.

Sollte es für den Halt des Schweißhilfsfügeteils 1 ausreichend sein, wird die Nut 52 allein durch den krummlinig verlaufenden Bereich am Nietgrund 52 gebildet. In diesem Fall endet der krummlinige Bereich auf Höhe des Klemmrings 40, so dass kein Vertikalbereich v50 in dieser Ausführungsform der Erfindung genutzt wird.

Weiterhin bevorzugt geht der oben genannte Vertikalabschnitt v₅₀ in den krummlinigen Nietgrund 52 in einem Winkel γ aus dem Bereich von 40 °≤γ≤60 ° über, vorzugsweise ist γ=50°.

Gegenüberliegend zum Elementkopf 30 ist die Schweißkontaktzone 60 am Stanzschaft 10 angeordnet. Gemäß einer bevorzugten Ausführungsform vorliegender Erfindung hat die Schweißkontaktzone 60 die Form einer axial vom Stanzschaft 10 vorstehenden Schweißwarze oder eines Schweißbuckels. Diese haben einen geringeren Durchmesser als der Stanzschaft 10. Zudem weisen sie eine gewölbte, meist abgerundete Form auf, um einen punktuellen Kontakt mit dem zweiten Bauteil herzustellen.

Gemäß einer weiteren bevorzugten Ausführungsform vorliegender Erfindung ist die Schweißkontaktzone 60 als ein konvex geformtes axiales Ende des Stanzschafts 10 ausgebildet. Dieses konvexe Ende wölbt sich kreisbogenförmig am Ende des Stanzschafts 10 in Fügerichtung. Diese Formgebung stellt ebenfalls eine ausreichende, bevorzugt punktuelle, Kontaktfläche mit dem zweiten Bauteil zum bevorzugten Widerstandsschweißen zur Verfügung. Natürlich ist an dieser Stelle auch eine ausgeformte Spitze nutzbar.

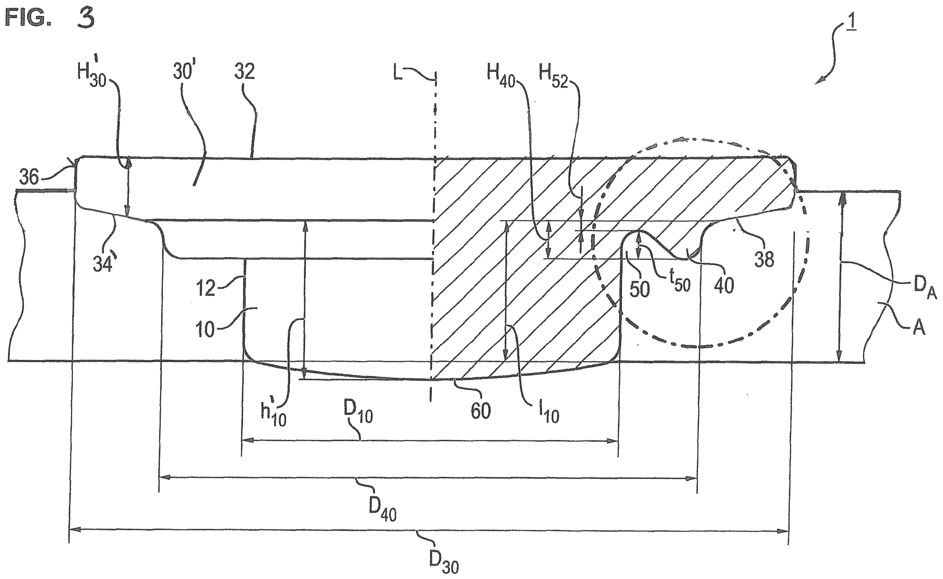

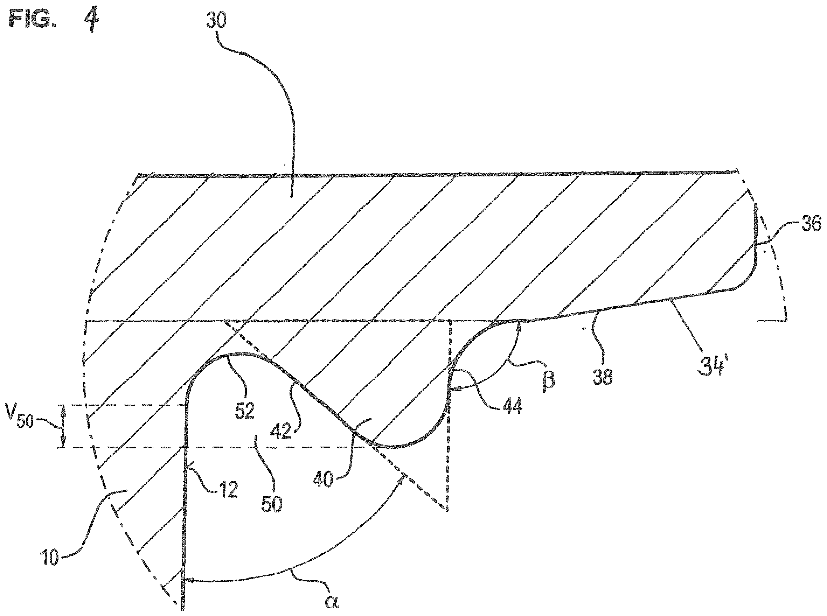

Eine weitere bevorzugte Ausführungsform des Schweißhilfsfügeteils 1' ist in den Figuren 3 und 4 gezeigt. In dieser Ausführungsform bezeichnen gleiche Bezugszeichen zur oben beschriebenen Elementgeometrie auch gleiche Eigenschaften. Diese oben beschriebenen Geometrieeigenschaften sind somit auf die hier beschriebene Elementgeometrie übertragbar.

Das Schweißhilfsfügeteil l'umfasst einen Senkkopf als Elementkopf 30'. Die Kopfunterseite 34' des Elementkopfes 30' ist bevorzugt beginnend am Klemmring 40 in Verlaufsrichtung radial auswärts geneigt angeordnet. Die Neigung erfolgt in schaftabgewandter Richtung. Entsprechend verringert sich radial auswärts die Höhe H₃₀' des Elementkopfes 30' bis zur Umlauffläche 36.

Die Senkkopfgeometrie eröffnet die Möglichkeit, den Elementkopf 30' während des Setzvorgangs im Bauteil abzusenken. Auf diese Weise wird die Störkontur des Elementkopfes 30' nach dem Fügevorgang reduziert. Vorzugsweise steht der Elementkopf 30' nach dem Setzen im Bauteil weniger als 0,4 mm an der Bauteiloberfläche über. Des Weiteren erhöht sich bevorzugt die Größe der Kontaktfläche zwischen Bauteil und der Unterseite 34' des Elementkopfes 30'. Dadurch besteht während eines späteren Schweißvorgangs die Möglichkeit, Wärme über eine größere Grenzfläche zwischen Element und Bauteil zu übertragen. Dies kann eine gezielte Bauteilerwärmung unterstützen oder eine Bauteilschädigung eines kleineren Kontaktbereichs zwischen Element und Bauteil durch Wärme verringern.

Aufgrund der bevorzugten Senkkopfgeometrie weist der Elementkopf 30' eine radial auswärts abnehmende axiale Dicke H₃₀' zwischen der Kopfoberseite 32 und der Kopfunterseite 34' auf. Außerhalb der Nut 50 oder des Klemmrings 40 liegt die axiale Dicke H₃₀' des Elementkopfs 30' vorzugsweise im Bereich von 0,3 mm ≤ H₃₀' ≤ 0,8 mm, vorzugsweise 0,4 nim≤ H₃₀' ≤ 0,5 mm.

Weiterhin bevorzugt weist der Stanzschaft 10 gemessen zwischen freiem Schaftende und der radial äu-ßersten Kopfunterseite 34' eine Länge h₁₀' im Bereich von 1,4 mm ≤ h₁₀' ≤ 3 mm, vorzugsweise von 1,4 mm ≤ h₁₀' ≤ 2,2 mm und weiter bevorzugt von 1,4 mm ≤ h₁₀' ≤ 1,6 mm, auf. Diese Geometriegestaltung in Kombination mit dem Senkkopf 30' unterstützt eine verringerte Störkontur des gesetzten Schweißhilfsfügeteils 1' und/oder eine variable Anwendbarkeit in dünnen Bauteilen.

Vorzugsweise hat der Klemmring 40 eine Höhe H₄₀ in Bezug auf die an den Klemmring 40 radial auswärts direkt angrenzende Kopfunterseite 34' im Bereich von 0,2 mm ≤ H₄₀ ≤ 1 mm, vorzugsweise 0,6 mm und insbesondere von 0,4 mm

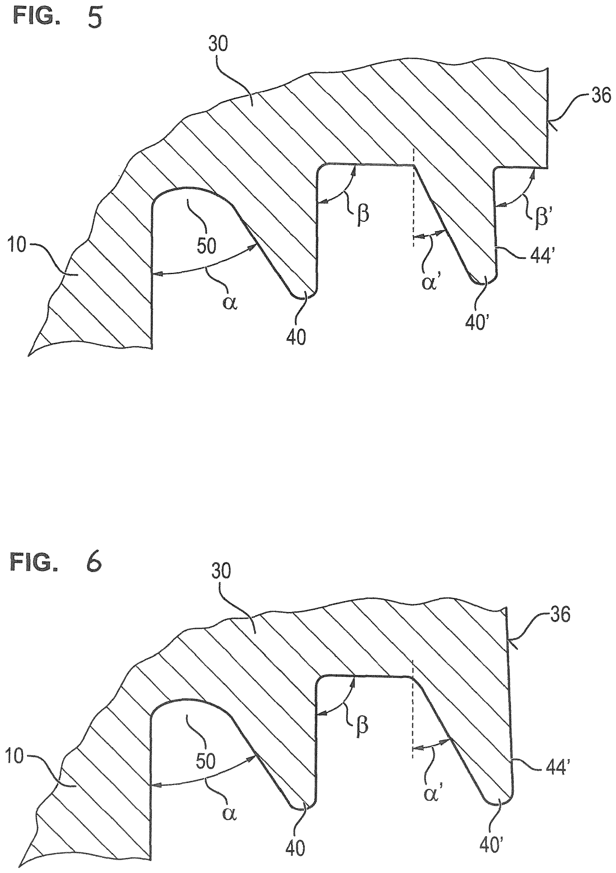

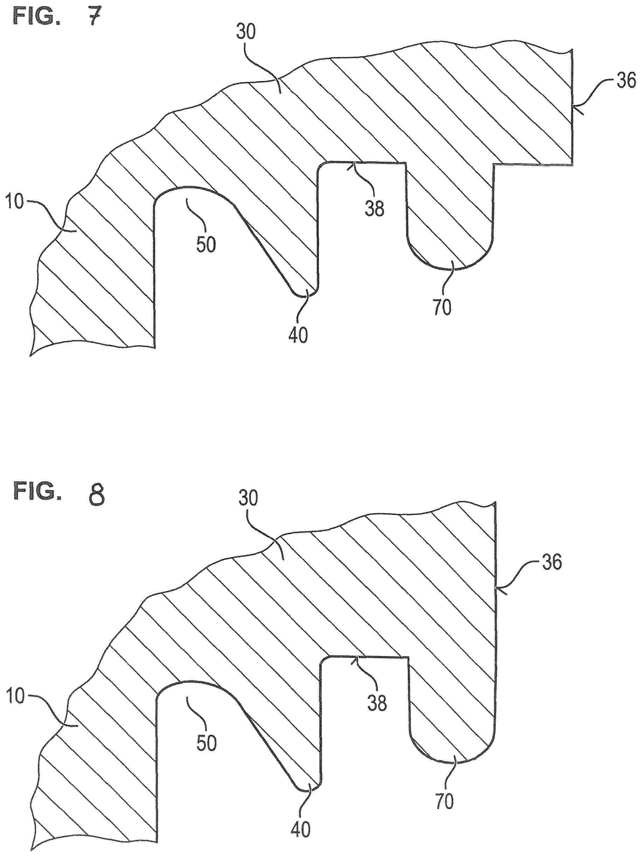

In den Figuren 5 und 6 sind weitere bevorzugte Ausgestaltungen der Unterseite 34 des Elementkopfes 30 dargestellt. Im Speziellen zeigen die Figuren 5 und 6 eine Ausschnittsvergrößerung eines Teils des Elementkopfes 30. Gemäß der oben beschriebenen bevorzugten Ausführungsformen des Schweißhilfsfügeteils 1 ist die Nutzung nur eines Klemmrings 40 von Vorteil. Um die klemmende Wirkung radial einwärts gerichteter Materialspannungen zu erhöhen, ist bevorzugt ein Außenring an der Kopfunterseite 34 angeordnet, der den inneren Klemmring 40 umgibt. Dieser Außenring hat in den bevorzugten Ausführungsformen der Figuren 5 und 6 ebenfalls die Konfiguration eines Klemmrings 40'. Es ist ebenfalls bevorzugt, diesen Außenring als einen Prägering 70 auszugestalten, wie es beispielgebend in den Ausführungsformen der Figuren 7 und 8 dargestellt ist.

Weist der Außenring die Konfiguration eines Klemmrings 40' auf, denn gelten für ihn die gleichen geometrischen Merkmale, funktionellen Eigenschaften und Gestaltungsprinzipien, wie sie oben in Bezug auf den Klemmring 40 beschrieben worden sind. Der Klemmring 40' ist bevorzugt konzentrisch um den Klemmring 40 angeordnet. Zudem erstreckt sich der Klemmring 40' kontinuierlich durchlaufend um den Stanzschaft 10 oder er ist in regelmäßigen Abständen durchbrochen. Gemäß der bevorzugten Ausführungsform in Figur 5 ist der radial außen angeordnete Klemmring 40' radial einwärts beabstandet zur Umlauffläche 36. Dies hat zur Folge, dass das durch den Klemmring 40' verdrängte Material nicht ungehindert entgegen der Fügerichtung abfließen kann. Stattdessen wird es durch die Unterseite 34 des Elementkopfes 30 blockiert, was eine weitere Klemmwirkung und somit Fixierung des Schweißhilfsfügeteils im Material des Bauteils A bewirkt.

Es ist ebenfalls bevorzugt, den weiteren Klemmring 40' abschließend an der radialen Außenseite des Elementkopfes 30 anzuordnen. Entsprechend geht dann die radial äußere Ringseite 44 in die Umlauffläche 36 über. Diese Konfiguration ermöglicht eine ungehinderte Materialverdrängung radial auswärts in das das Schweißhilfsfügeteil 1 umgebende Material des Bauteils A.

Wie man anhand der bevorzugten Ausführungsformen der Figuren 7 und 8 erkennen kann, weist der zusätzlich zum Klemmring 40 bereitgestellte Außenring alternativ die Konfiguration eines Prägerings 70 auf. Ein Prägering 70 ist vorzugsweise bezogen auf seinen Querschnitt gleichmäßig oder axialsymmetrisch geformt. Daraus folgt, dass eine Materialverdrängung vorzugsweise in gleichem Maße radial einwärts und radial auswärts erfolgt. Während des Fügevorgangs wird der Prägering 70 in das Bauteil A gepresst. Der eingepresste Prägering stellt eine Abdichtung der Fügestelle gegen ein Eindringen von Material bzw. Schmutz von außen aber auch durch beispielsweise entstehende Gase beim Fügen von innen nach außen dar. Des Weiteren hat die benachbarte Anordnung des Prägerings 70 und des Klemmrings 40 bevorzugt den Vorteil zur Folge, dass Material zwischen der radial äußeren Ringseite 44 und dem Prägering 70 komprimiert wird. Dies unterstützt den Halt des Schweißhilfsfügeteils im Bauteil A und die Abdichtung durch den Prägering 70.

Um die Wirkung des Prägering 70 zu verstärken, wird dieser vorzugsweise radial einwärts in Bezug auf die Umlauffläche 36 an der Unterseite 34 des Elementkopfes 30 angeordnet. Sofern eine ungehinderte Materialverdrängung radial auswärts und entgegen der Fügerichtung tolerierbar ist, ist es ebenfalls bevorzugt, den Prägering 70 direkt benachbart zur Umlauffläche 36 anzuordnen (siehe Figur 6).

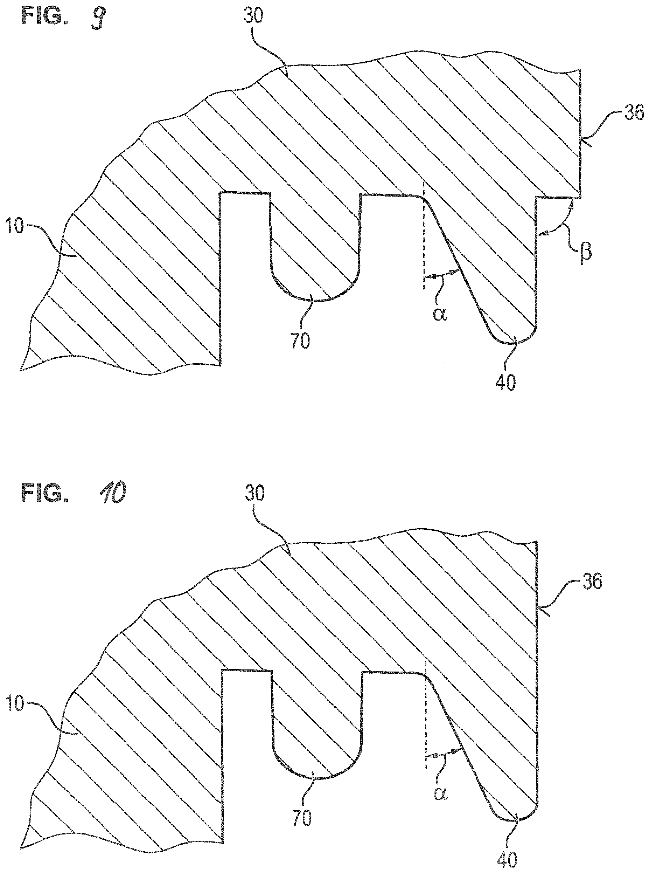

Sollte es erforderlich sein, die Fügestelle gegen das Entweichen von bspw. Gasen oder gegen das Eindringen von Verschmutzungen besonders zu schützen, wird bevorzugt ein Prägering 70 in direkter Nachbarschaft zum Stanzschaft 10 angeordnet. In diesem Zusammenhang bevorzugte Ausgestaltungen des Schweißhilfsfügeteils 1 ist in der Figur 9 dargestellt. Der Prägering 70 ist jeweils innerhalb eines umgebenden Klemmrings 40 positioniert. Zur weiteren vorteilhaften und bevorzugten Nutzung der Wirkung des Klemmrings 40 wird der Klemmring 40 derart konfiguriert, dass die Materialverdrängung radial einwärts gegen den Prägering 70 stattfindet. Die Mantelfläche des Prägerings 70, insbesondere die radial außen liegende Mantelfläche des Prägerings 70, übernimmt dann bevorzugt die Funktion der Mantelfläche des Stanzschafts 10. Entsprechend wird dann unter anderem das Schweißhilfsfügeteil 1 durch radial einwärts wirkende mechanische Spannungen gegen den Prägering 70 gehalten. Figur 10 offenbart ein Beispiel, das nicht unter der Erfindung steht.

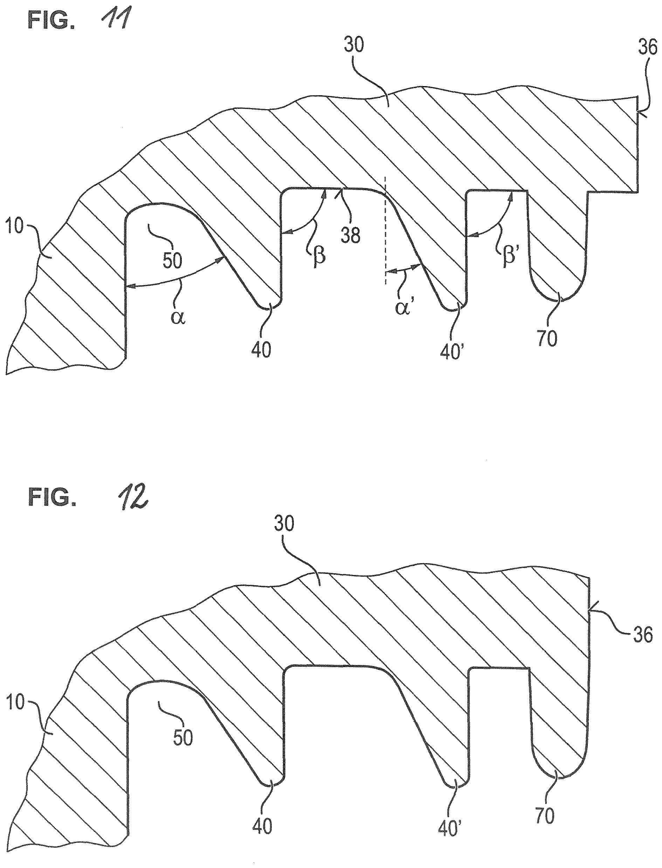

Die Figuren 11 und 12 zeigen weitere bevorzugte Ausführungsformen der Gestaltung der Unterseite 34 des Elementkopfes 30. Im Speziellen wurde hier die bevorzugte Ausführungsform der Figur 5 mit den beiden Klemmringen 40, 40' mit einem zusätzlichen radial außen angeordneten Prägering 70 kombiniert. Dieser radial außen angeordnete Prägering 70 ist in gleicher Weise wie in den bevorzugten Ausführungsformen der Figuren 7 und 8 radial einwärts beabstandet zu Umlauffläche 36 oder direkt angrenzend an die Umlauffläche 36 angeordnet. Der Prägering 70, der kontinuierlich durchlaufend oder regelmäßig unterbrochen ausgebildet ist, sorgt bevorzugt für eine Abdichtung der Fügestelle nach außen.

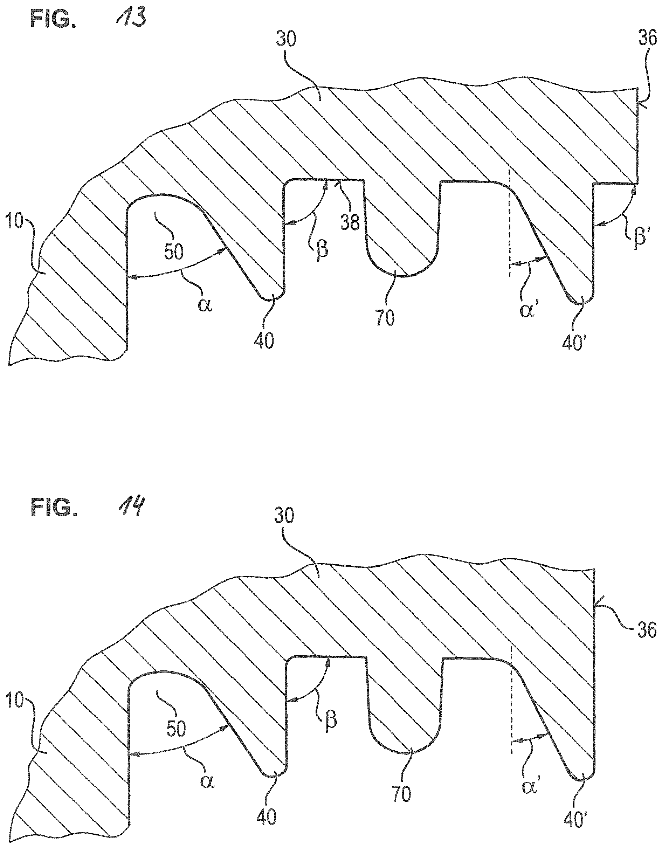

Die Ausführungsformen der Figuren 13 und 14 gehen von der bevorzugten Ausgestaltung der Figur 7 aus.

Um hier eine zusätzliche Klemmwirkung am Prägering 70 zu erzielen, wurde ein zusätzlicher Außenring in Bezug auf den bereits vorhandenen Klemmring 40 und den Prägering 70 angeordnet. Dieser Außenring hat die Form und Konfiguration eines zusätzlichen Klemmrings 40'. Entsprechend erzeugt dieser Klemmring 40' einen radial einwärts gerichteten zusätzlichen Materialfluss. Dieser bewirkt zusätzliche Radialspannungen, die gegen die radiale Außenseite des Prägering 70 wirken. Wie bereits bei den bevorzugten Ausgestaltungen der Figuren 5 und 6 ist der radial außen angeordnete Klemmring 40' radial einwärts beabstandet zur Umlauffläche 36 angeordnet (vergleiche Figur 13). Ebenfalls bevorzugt geht der radial außen angeordnete Klemmring 40' direkt in die Umlauffläche 36 über, wie in Figur 14 zu erkennen ist.

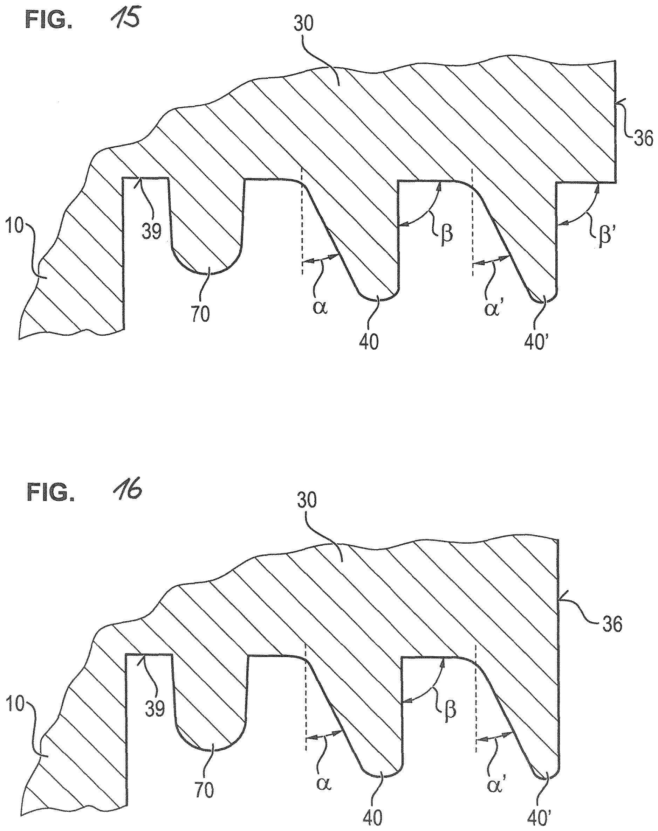

Die in den Figuren 15 und 16 gezeigten bevorzugten Ausführungsformen der Unterseite 32 des Elementkopfes 30 zeigen die Kombination der bevorzugten Ausführungsform aus Figur 9 mit einem weiteren radial außen angeordneten Klemmring 40'. Dieser radial außen angeordnete Klemmring 40' verstärkt die Klemmwirkung, die bereits durch die Materialverdrängung aufgrund des Klemmrings 40 erzielt wird. Dabei verdrängt der zusätzliche Klemmring 40' Material radial einwärts gegen die radial äußere Ringseite 44 des Klemmrings 40. Der radial äußere Klemmring 40' ist bevorzugt radial einwärts beabstandet von der Umlauffläche 36 angeordnet, wie in Figur 15 dargestellt ist. Ebenfalls bevorzugt ist der radial außen angeordnete Klemmring 40' direkt benachbart zur Umlauffläche 36 angeordnet, wie man in Figur 16 erkennen kann.

In gleicher Weise, wie es in Bezug auf die vorhergehend beschriebenen Ausführungsformen hervorgehoben worden ist, hat der radial außen angeordnete zusätzliche Klemmring 40' eine kontinuierlich umlaufende Gestalt oder er ist in regelmäßigen Abständen unterbrochen vorgesehen.

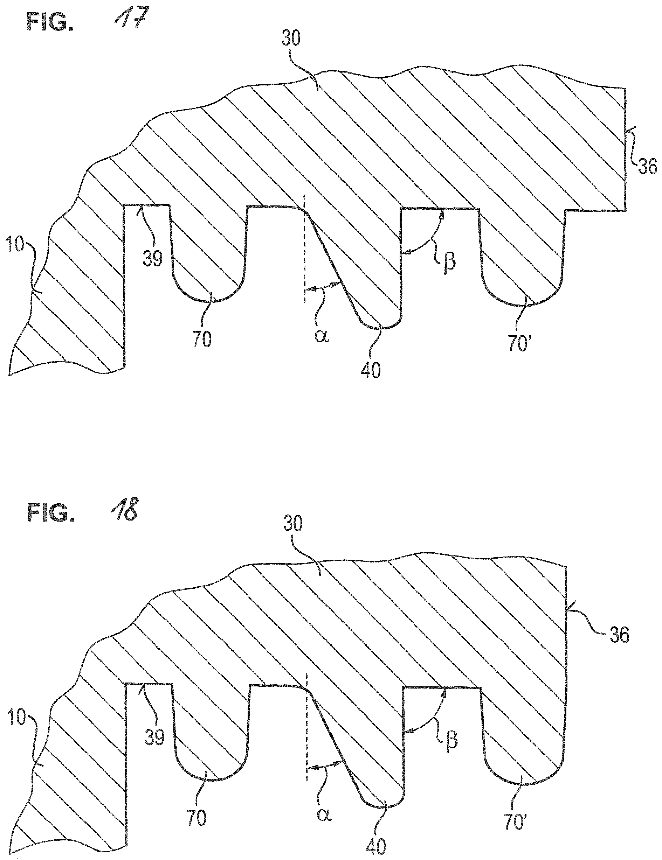

Die Figuren 17 und 18 zeigen eine Kombination der bevorzugten Ausführungsform der Figur 9 mit einem weiteren radial außen angeordneten Prägering 70'. Dieser zusätzliche radial außen angeordnete Prägering 70' sorgt für eine zusätzliche und ergänzende Abdichtungswirkung zum radial innen angeordneten Prägering 70. Zudem bevorzugt ist der radial außen angeordnete Prägering 70' kontinuierlich durchlaufend oder regelmäßig unterbrochen vorgesehen. Des Weiteren ist es bevorzugt, den Prägering 70' radial einwärts beabstandet zur Umlauffläche 36 anzuordnen, wie Figur 17 zeigt. Gemäß einer weiteren bevorzugten Ausführungsform, die in Figur 18 dargestellt ist, ist der radial außen angeordnete Prägering 70' unmittelbar benachbart zur Umlauffläche 36 angeordnet.

### Bezugszeichenliste

- 1: Schweißhilfsfügeteil
- 10: Stanzschaft
- 12: Mantelfläche
- 30; 30': Elementkopf
- 32: Kopfoberseite
- 34; 34': Kopfunterseite
- 36: Umlauffläche
- 38: äußere Ringfläche
- 39: innere Ringfläche
- 40: Klemmring
- 42: innere Ringseite
- 44: äußere Ringseite
- 50: Zwischenraum, Nut
- 52: Grund
- 60: Schweißkontaktzone
- L: Längsachse
- A: erstes Bauteil
- 70, 70': Prägering

## Patentansprüche

1. Ein Sehweißhilfsfügeteil (1), mit dem eine Schweißverbindung, insbesondere eine Widerstandsschweißverbindung, zwischen einem ersten Bauteil (A) aus schlecht schweißbarem Material und einem zweiten Bauteil aus schweißbarem Material herstellbar ist, welches die folgenden Merkmale aufweist:
a. einen Stanzschaft (10), der annähernd drehungsfrei stanzend in das erste Bauteil (A) einpressbar ist, der entlang einer Längsachse (L) des Schweißhilfsfügeteils (1) verläuft und der an einem ersten axialen Ende einen Elementkopf (30) und an einem zweiten axialen Ende eine in axialer Richtung vom Stanzschaft (10) vorstehende Schweißkontaktzone (60) aufweist,
b. der Elementkopf (30) erstreckt sich radial über den Stanzschaft (10) hinaus und umfasst eine schaftabgewandte Kopfoberseite (32) und eine schaftzugewandte Kopfunterseite (34), die über eine radial den Elementkopf (30) begrenzende Umlauffläche (36) miteinander verbunden sind, **dadurch gekennzeichnet, dass**
c. die Kopfunterseite (34) mindestens einen ersten geschlossen um den Stanzschaft (10) umlaufenden und axial in Richtung Stanzschaft (10) vorstehenden Klemmring (40) aufweist,
c1. der in einem ersten Radialabstand zum Stanzschaft (10) angeordnet ist,
c2. der eine dreiecksähnliche Querschnittsform besitzt, die sich in axialer Richtung des Stanzschafts (10) verjüngt, und
c3. der an einer vom Stanzschaft abgewandten Seite radial beabstandet zur Umlauffläche (36) des Elementkopfes (30) angeordnet ist, wobei
c4. die axiale Querschnittsform des Klemmrings (40) durch eine radial innere Ringseite (42) und eine radial äußere Ringseite (44) gebildet wird, deren innere Ringseite (42) mit dem Stanzschaft (10) einen Neigungswinkel α im Bereich von 10 °≤ α ≤ 70 ° einschließt.

2. Schweißhilfsfügeteil (1) gemäß Patentanspruch 1, in dem der Klemmring (40) an der vom Stanzschaft abgewandten Seite durch eine radial verlaufende äußere Ringfläche (38) an der Kopfunterseite (34) und/oder durch mindestens einen geschlossen oder durchbrochen um den Stanzschaft (10) umlaufenden und axial in Richtung Stanzschaft (10) vorstehenden Außenring an der Kopfunterseite (34) umgeben ist.

3. Schweißhilfsfügeteil (1) gemäß einem der vorhergehenden Patentansprüche 1 oder 2, in dem der Klemmring (40) an der dem Stanzschaft zugewandten Seite benachbart zu einer radial verlaufenden inneren Ringfläche an der Kopfunterseite (34) und/oder benachbart zu mindestens einem geschlossen oder durchbrochen um den Stanzschaft (10) umlaufenden und axial in Richtung Stanzschaft (10) vorstehenden Innenring an der Kopfunterseite (34) angeordnet ist.

4. Schweißhilfsfügeteil (1) gemäß einem der vorhergehenden Patentansprüche, in dem die axiale Querschnittsform des Klemmrings (40) durch eine radial innere Ringseite (42) und eine radial äußere Ringseite (44) gebildet wird, deren innere Ringseite (42) mit der Längsachse des Stanzschafts (10) den Neigungswinkel α im Bereich von 10 °≤ α ≤ 70 °, vorzugsweise α = 50 °, einschließt.

5. Schweißhilfsfügeteil (1) gemäß einem der vorhergehenden Patentansprüche, in dem die Querschnittsform mindestens eines Klemmrings (40) einem rechtwinkligen Dreieck angenähert ist, dessen Hypotenuse dem Stanzschaft (10) zugewandt ist.

6. Schweißhilfsfügeteil (1) gemäß Patentanspruch 1, das an der Kopfunterseite (34) nur einen geschlossen um den Stanzschaft (10) umlaufenden Klemmring (40) aufweist, der in einem ersten Radialabstand zum Stanzschaft (10) angeordnet ist, eine dreiecksähnliche Querschnittsform besitzt, die sich in axialer Richtung des Stanzschafts (10) verjüngt, und der an einer vom Stanzschaft abgewandten Seite eine radial verlaufende äußere Ringfläche (38) an der Kopfunterseite (34) aufweist, die in die Umlauffläche (36) des Elementkopfes (30) übergeht.

7. Schweißhilfsfügeteil (1) gemäß einem der vorhergehenden Patentansprüche, das an der Kopfunterseite zwischen dem Stanzschaft (10) und dem benachbarten Klemmring (40) oder einem benachbarten Prägering (70) eine Nut (50) vertieft in Richtung Elementkopf (30) aufweist.

8. Schweißhilfsfügeteil (1) gemäß Patentanspruch 7, in dem der Elementkopf (30) in Längsrichtung des Stanzschafts (10) im Bereich der Nut eine größere Dicke als außerhalb der Nut und des Klemmrings und/oder Prägerings (70) aufweist.

9. Schweißhilfsfügeteil (1) gemäß einem der vorhergehenden Patentansprüche 1 bis 8, in dem der Elementkopf (30) zumindest radial auswärts ab dem Klemmring als ein Senkkopf ausgebildet ist, eine radial auswärts abnehmende axiale Dicke H₃₀' zwischen Kopfoberseite (32) und Kopfunterseite (34) außerhalb einer Nut oder eines Rings im Bereich von 0,3 mm ≤ H₃₀' ≤ 0,8 mm, vorzugsweise 0,4 mm≤ H₃₀' ≤ 0,5 mm, und der Stanzschaft (10) gemessen zwischen freiem Schaftende und der radial äußersten Kopfunterseite eine Länge h₁₀' im Bereich von 1,4 mm ≤ h₁₀' ≤ 3 mm aufweist, vorzugsweise von 1,4 mm ≤ h₁₀' ≤ 2,2 mm und weiter bevorzugt von 1,4 mm ≤ h₁₀' ≤ 1,6 mm.

10. Schweißhilfsfiigeteil (1) gemäß einem der vorhergehenden Patentansprüche 1 bis 8 und 9, in dem der Klemmring (40) eine Höhe H₄₀ in Bezug auf die an den Klemmring angrenzende Kopfunterseite (34) im Bereich von 0,2 mm ≤ H₄₀ ≤ 1 mm, vorzugsweise 0,6 mm und weiter bevorzugt 0,4 mm, aufweist.

11. Schweißhilfsftigeteil (1) gemäß Patentanspruch 7 oder einem der vorhergehenden Patentansprüche in Kombination mit Patentanspruch 7, in dem die Nut (50) im Vergleich zu einer Höhe eines unmittelbar benachbarten Klemmrings (40) oder Prägerings (70) eine Tiefe tso im Bereich von 0,2 mm ≤ t₅₀ ≤ 0,6 mm, vorzugsweise 0,3 mm, aufweist.

12. Bauteilverbund aus zumindest einem ersten Bauteil (A) und einem Schweißhilfsfügeteil (1) gemäß einem der vorhergehenden Patentansprüche, welches im ersten Bauteil (A) verliersicher befestigt ist, wobei das erste Bauteil vorzugsweise aus schlecht schweißbarem Material besteht.

13. Herstellungsverfahren für einen Bauteilverbund aus zumindest einem ersten Bauteil und dem Schweißhilfsfügeteil gemäß einem der vorhergehenden Patentansprüche 1 bis 11, insbesondere zur Herstellung einer Fahrzeugkarosserie, welches die folgenden Schritte aufweist:
a. Bereitstellen des ersten Bauteils (A), vorzugsweise aus schlecht schweißbarem Material,
b. annähernd drehungsfreies Einpressen des Schweißhilfsfügeteils (1) in das erste Bauteil (A), sodass
der Stanzschaft das Bauteil vollständig durchdringt,
die Schweißkontaktzone eine dem Elementkopf abgewandte Bauteilseite überragt, und
der Elementkopf an einer dem Elementkopf zugewandten Bauteilseite anliegt und dadurch der Klemmring in die zugewandte Bauteilseite eingeprägt wird.

14. Herstellungsverfahren gemäß Patentanspruch 13, mit dem weiteren Schritt:
c. Anordnen des ersten Bauteils mit Schweißhilfsfügeteil über einem zweiten Bauteil derart, dass ein elektrischer Kontakt zwischen der Schweißkontaktzone des Stanzschafts und dem zweiten Bauteil herstellbar ist, und
d. Widerstandsschweißen des Schweißhilfsfügeteils und des zweiten Bauteils.

15. Herstellungsverfahren gemäß Patentanspruch 13, in dem das Schweißhilfsftigeteil nach dem Einpressen verliersicher im ersten Bauteil befestigt ist und das erste Bauteil als Halbzeug vorliegt und Widerstandsschweißen des Halbzeugs mit dem zweiten Bauteil am Herstellungsort des Einpressens und/oder nach einem Zwischenlagern des Halbzeugs nach dem Einpressen oder nach einem Transport vom Herstellungsort des Einpressens zu einem Verarbeitungsort zum Widerstandsschweißen.

## Claims

1. A welding auxiliary joining part (1) with which a welding connection, in particular a resistance welding connection, is establishable between a first component (A) of poorly weldable material and a second component of weldable material, which comprises the following features:
a. a punch shaft (10) which is punchingly pressable into the first component (A) approximately rotation-free, which extends along a longitudinal axis (L) of the welding auxiliary joining part (1) and which has an element head (30) at a first axial end and a welding contact zone (60) projecting in the axial direction from the punch shaft (10) at a second axial end,
b. the element head (30) extends radially beyond the punch shaft (10) and comprises a head upper side (32) facing away from the shaft and a head underside (34) facing towards the shaft, which are connected to one another by means of a circumferential face (36) which radially delimits the element head (30), **characterized in that**
c. the head underside (34) comprises at least one first clamping ring (40) which extends around the punch shaft (10) in a closed manner and projects axially in the direction of the punch shaft (10),
c1. which is arranged at a first radial distance from the punch shaft (10),
c2. which has a triangular-like cross-sectional shape which tapers in the axial direction of the punch shaft (10), and
c3. which is arranged at a side facing away from the punch shaft radially spaced from the circumferential face (36) of the element head (30), wherein
c4. the axial cross sectional shape of the clamping ring (40) is formed by a radially inner ring side (42) and a radially outer ring side (44), the inner ring side (42) of which encloses with the punch shaft (10) an inclination angle α in the range of 10° ≤ α ≤ 70°.

2. Welding auxiliary joining part (1) according to claim 1, in which the clamping ring (40) is surrounded at the side facing away from the punch shaft by a radially extending outer ring face (38) at the head underside (34) and/or by at least one outer ring at the head underside (34), which outer ring extends around the punch shaft (10) in a closed or interrupted manner and projects axially in the direction of the punch shaft (10).

3. Welding auxiliary joining part (1) according to one of the preceding claims 1 or 2, in which the clamping ring (40) is arranged at the side facing the punch shaft adjacent to a radially extending inner ring face at the head underside (34) and/or adjacent to at least one inner ring at the head underside (34) which extends around the punch shaft (10) in a closed or interrupted manner and projects axially in the direction of the punch shaft (10).

4. Welding auxiliary joining part (1) according to one of the preceding claims, in which the axial cross-sectional shape of the clamping ring (40) is formed by a radially inner ring side (42) and a radially outer ring side (44), the inner ring side (42) of which encloses with the longitudinal axis of the punch shaft (10) the inclination angle α in the range of 10° ≤ α ≤ 70°, preferably α = 50°.

5. Welding auxiliary joining part (1) according to one of the preceding claims, in which the cross-sectional shape of at least one clamping ring (40) is approximated to a right-angled triangle, the hypotenuse of which faces the punch shaft (10).

6. Welding auxiliary joining part (1) according to claim 1, which has at the head underside (34) only one clamping ring (40) which extends around the punch shaft (10) in a closed manner and which is arranged at a first radial distance from the punch shaft (10), and which has a triangular cross-sectional shape, which tapers in the axial direction of the punch shaft (10) and which has at a side facing away from the punch shaft a radially extending outer ring face (38) at the head underside (34) which transitions into the circumferential face (36) of the element head (30).

7. Welding auxiliary joining part (1) according to one of the preceding claims, which comprises a groove (50) at the head underside between the punch shaft (10) and the adjacent clamping ring (40) or an adjacent stamping ring (70), which groove is recessed in the direction of the element head (30).

8. Welding auxiliary joining part (1) according to claim 7, in which the element head (30) has a greater thickness in the longitudinal direction of the punch shaft (10) in the portion of the groove than outside of the groove and the clamping ring and/or the stamping ring (70).

9. Welding auxiliary joining part (1) according to one of the preceding claims 1 to 8, in which the element head (30) is formed as a countersunk head at least radially outwardly from the clamping ring, has a radially outwardly decreasing axial thickness H₃₀' between the head upper side (32) and the head underside (34) outside of a groove or ring in the range of 0.3 mm ≤ H₃₀' ≤ 0.8 mm, preferably 0.4 mm ≤ H₃₀' ≤ 0.5 mm, and the punch shaft (10) measured between the free shaft end and the radially outermost head underside has a length h₁₀' in the range of 1.4 mm ≤ h₁₀' ≤ 3 mm, preferably 1.4 mm ≤ h₁₀' ≤ 2.2 mm and further preferred 1.4 mm ≤ h₁₀' ≤ 1.6 mm.

10. Welding auxiliary joining part (1) according to one of the preceding claims 1 to 8 and 9, in which the clamping ring (40) has a height H₄₀ with respect to the head underside (34) adjacent to the clamping ring in the range of 0.2 mm ≤ H₄₀ ≤ 1 mm, preferably 0.6 mm and further preferred 0.4 mm.

11. Welding auxiliary joining part (1) according to claim 7 or one of the preceding claims in combination with claim 7, in which the groove (50) has a depth tso in comparison with a height of an immediately adjacent clamping ring (40) or stamping ring (70) in the range of 0.2 mm ≤ t₅₀ ≤ 0.6 mm, preferably 0.3 mm.

12. Component composite comprising at least a first component (A) and a welding auxiliary joining part (1) according to one of the preceding claims, which is fastened in the first component (A) in a loss-proof manner, wherein the first component is preferably made of poorly weldable material.

13. Manufacturing method of a component composite of at least a first component and the welding auxiliary joining part according to one of the preceding claims 1 to 11, in particular for manufacturing a vehicle body, which comprises the following steps:
a. providing the first component (A), preferably of poorly weldable material,
b. pressing the welding auxiliary joining part (1) into the first component (A) approximately rotation-free, so that
the punch shaft completely penetrates the component,
the welding contact zone projects beyond a component side facing away from the element head, and
the element head abuts against a component side facing the element head and the clamping ring is thereby stamped into the component side facing the element head.

14. Manufacturing method according to claim 13, with the further step:
c. arranging the first component with the welding auxiliary joining part above a second component in such a manner that an electrical contact is establishable between the welding contact zone of the punch shaft and the second component, and
d. resistance welding the welding auxiliary joining part and the second component.

15. Manufacturing method according to claim 13, in which the welding auxiliary joining part is fastened in a loss-proof manner in the first component after pressing-in, and the first component is present as a semi-finished product, and resistance welding of the semi-finished product with the second component at the place of manufacture of the pressing-in and/or after intermediate storage of the semi-finished product after pressing-in or after transport from the place of manufacture of the pressing-in to a processing place for resistance welding.

## Revendications

1. Pièce d'aide à la connexion par soudage (1) permettant d'établir une soudure, notamment une soudure par résistance, entre un premier composant (A) à base d'un matériau difficilement soudable et un second composant à base d'un matériau soudable, laquelle présente les caractéristiques suivantes :
a) une tige d'estampage (10), qui peut être enfoncée pratiquement sans rotation dans le premier composant (A) par estampage, qui s'étend le long d'un axe longitudinal (L) de la pièce d'aide à la connexion par soudage (1) et qui présente une tête d'élément (30) à une première extrémité axiale et une zone de contact de soudage (60) dépassant de la tige d'estampage (10) dans le sens axial à une seconde extrémité axiale,
b) la tête d'élément (30) s'étend radialement au-delà de la tige d'estampage (10) et comprend un dessus de tête (32) à l'opposé de la tige et un dessous de tête (34) tourné vers la tige, qui sont reliés l'un à l'autre par le biais d'une surface périphérique (36) limitant radialement la tête d'élément (30), **caractérisée en ce que**
c) le dessous de tête (34) présente au moins une première bague de serrage (40) circulaire fermée autour de la tige d'estampage (10) et dépassant axialement en direction de la tige d'estampage (10),
c1. qui est disposée à une première distance radiale par rapport à la tige d'estampage (10),
c2. qui possède une forme semblable à un triangle en coupe transversale, qui s'effile dans le sens axial de la tige d'estampage (10), et
c3. qui est disposée sur une face opposée à la tige d'estampage (10), espacée radialement par rapport à la surface périphérique (36) de la tête d'élément (30), sachant que
c4. la forme axiale en coupe transversale de la bague de serrage (40) est constituée par une face de bague radialement intérieure (42) et une face de bague radialement extérieure (44), dont la face de bague intérieure (42) définit un angle d'inclinaison α dans la plage de 10 ° ≤ α ≤ 70 ° avec la tige d'estampage (10).

2. Pièce d'aide à la connexion par soudage (1) selon la revendication 1, dans laquelle la bague de serrage (40) est entourée par une surface de bague extérieure (38) s'étendant radialement du côté opposé à la tige d'estampage et/ou par au moins une bague extérieure circulaire, fermée ou ajourée autour de la tige d'estampage (10) et dépassant axialement en direction de la tige d'estampage (10) sur le dessous de tête (34).

3. Pièce d'aide à la connexion par soudage (1) selon l'une des revendications précédentes 1 ou 2, dans laquelle la bague de serrage (40) est disposée du côté tourné vers la tige d'estampage à proximité d'une surface de bague intérieure s'étendant radialement sur le dessous de tête (34) et/ou à proximité d'au moins une bague intérieure circulaire, fermée ou ajourée autour de la tige d'estampage (10) et dépassant axialement en direction de la tige d'estampage (10) sur le dessous de tête (34).

4. Pièce d'aide à la connexion par soudage (1) selon l'une des revendications précédentes, dans laquelle la forme axiale en coupe transversale de la bague de serrage (40) est constituée par une face de bague radialement intérieure (42) et une face de bague radialement extérieure (44), dont la face de bague intérieure (42) définit un angle d'inclinaison α dans la plage de 10 ° ≤ α ≤ 70 °, de préférence α = 50 ° avec l'axe longitudinal de la tige d'estampage (10).

5. Pièce d'aide à la connexion par soudage (1) selon l'une des revendications précédentes, dans laquelle la forme en coupe transversale d'au moins une bague de serrage (40) se rapproche d'un triangle rectangle, dont l'hypoténuse est tournée vers la tige d'estampage (10).

6. Pièce d'aide à la connexion par soudage (1) selon la revendication 1, qui présente uniquement une bague de serrage (40) circulaire fermée autour de la tige d'estampage (10) sur le dessous de tête (34), qui est disposée à une première distance radiale par rapport à la tige d'estampage (10), possède une forme semblable à un triangle en coupe transversale, qui s'effile dans le sens axial de la tige d'estampage (10), et qui présente une surface de bague extérieure (38) s'étendant radialement du côté opposé à la tige d'estampage sur le dessous de tête (34), qui se prolonge dans la surface périphérique (36) de la tête d'élément (30).

7. Pièce d'aide à la connexion par soudage (1) selon l'une des revendications précédentes, qui présente une rainure (50) creusée en direction de la tête d'élément (30) sur le dessous de tête entre la tige d'estampage (10) et la bague de serrage (40) adjacente ou une virole (70) adjacente.

8. Pièce d'aide à la connexion par soudage (1) selon la revendication 7, dans laquelle la tête d'élément (30) présente une plus grande épaisseur au niveau de la rainure qu'en dehors de la rainure et de la bague de serrage et/ou de la virole (70) dans le sens longitudinal de la tige d'estampage (10).

9. Pièce d'aide à la connexion par soudage (1) selon l'une des revendications précédentes 1 à 8, dans laquelle la tête d'élément (30) est conçue sous la forme d'une tête fraisée au moins radialement vers l'extérieur à partir de la bague de serrage, présente une épaisseur axiale H₃₀' diminuant radialement vers l'extérieur entre le dessus de tête (32) et le dessous de tête (34) en dehors d'une rainure ou d'une bague dans la plage de 0,3 mm ≤ H₃₀' ≤ 0,8 mm, de préférence 0,4 mm ≤ H₃₀' ≤ 0,5 mm, et la tige d'estampage (10) mesurée entre l'extrémité de tige libre et le dessous de tête radialement extérieur présente une longueur h₁₀' dans la plage de 1,4 mm ≤ h₁₀' ≤ 3 mm, de préférence 1,4 mm ≤ h₁₀' ≤ 2,2 mm et mieux encore 1,4 mm ≤ h₁₀' ≤ 1,6 mm.

10. Pièce d'aide à la connexion par soudage (1) selon l'une des revendications précédentes 1 à 8 et 9, dans laquelle la bague de serrage (40) présente une hauteur H₄₀ par rapport au dessous de tête (34) adjacent à la bague de serrage dans la plage de 0,2 mm ≤ H₄₀ ≤ 1 mm, de préférence 0,6 mm et mieux encore de 0,4 mm.

11. Pièce d'aide à la connexion par soudage (1) selon la revendication 7 ou selon l'une des revendications précédentes en combinaison avec la revendication 7, dans laquelle la rainure (50) présente une profondeur t₅₀ dans la plage de 0,2 mm ≤ t₅₀ ≤ 0,6 mm, de préférence 0,3 mm par rapport à une hauteur d'une bague de serrage (40) ou d'une virole (70) directement adjacente.

12. Assemblage d'au moins un premier composant (A) et d'une pièce d'aide à la connexion par soudage (1) selon l'une des revendications précédentes, laquelle est fixée de façon imperdable dans le premier composant (A), sachant que le premier composant est constitué de préférence à base d'un matériau difficilement soudable.

13. Procédé de fabrication d'un assemblage d'au moins un premier composant (A) et d'une pièce d'aide à la connexion par soudage selon l'une des revendications précédentes 1 à 11, notamment destiné à la fabrication d'une carrosserie de voiture, lequel présente les étapes suivantes :
a. la fourniture du premier composant (A), de préférence à base d'un matériau difficilement soudable,
b. l'enfoncement pratiquement sans rotation de la pièce d'aide à la connexion par soudage (1) dans le premier composant (A), de sorte que
la tige d'estampage traverse complètement le composant,
la zone de contact de soudage surmonte une face de composant à l'opposé de la tête d'élément, et
la tête d'élément repose sur une face de composant tournée vers la tête d'élément et la bague de serrage est ainsi incrustée dans la face de composant en vis-à-vis.

14. Procédé de fabrication selon la revendication 13, présentant encore l'étape suivante :
c. la disposition du premier composant avec la pièce d'aide à la connexion par soudage au-dessus d'un second composant, de telle sorte qu'un contact électrique peut être établi entre la zone de contact de soudage de la tige d'estampage et le second composant, et
d. le soudage par résistance de la pièce d'aide à la connexion par soudage et du second composant.

15. Procédé de fabrication selon la revendication 13, dans lequel la pièce d'aide à la connexion par soudage est fixée de façon imperdable dans le premier composant (A) après l'enfoncement et le premier composant est disponible comme produit semi-fini et soudage par résistance du produit semi-fini avec le second composant sur le lieu de réalisation de l'enfoncement et/ou après un entreposage intermédiaire du produit semi-fini suite à l'enfoncement ou après un transport du lieu de réalisation de l'enfoncement vers un lieu de transformation destiné au soudage par résistance.
